(19) Europäisches Patentamt
European Patent Office
Office européen des brevets

(11) **EP 4 628 229 A1**

(12) **EUROPEAN PATENT APPLICATION**
published in accordance with Art. 153(4) EPC

(43) Date of publication:
**08.10.2025 Bulletin 2025/41**

(21) Application number: **23897668.2**

(22) Date of filing: **24.11.2023**

(51) International Patent Classification (IPC):
**B21D 28/36** (2006.01) **B21D 28/00** (2006.01)
**B23K 26/38** (2014.01)

(52) Cooperative Patent Classification (CPC):
**B21D 28/00; B21D 28/10; B21D 28/36; B23K 26/38**

(86) International application number:
**PCT/JP2023/042111**

(87) International publication number:
**WO 2024/117020 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 JP 2022189495
08.05.2023 JP 2023076773
30.10.2023 JP 2023185717**

(71) Applicant: **Amada Co., Ltd.
Isehara-shi, Kanagawa 259-1196 (JP)**

(72) Inventors:
• **TAKEDA, Chisato**
**Isehara-shi, Kanagawa 259-1196 (JP)**
• **OKAMOTO, Takuya**
**Isehara-shi, Kanagawa 259-1196 (JP)**
• **KISHI, Atsuya**
**Isehara-shi, Kanagawa 259-1196 (JP)**

(74) Representative: **Grünecker Patent- und
Rechtsanwälte
PartG mbB
Leopoldstraße 4
80802 München (DE)**

(54) **MACHINING POSITION LAYOUT METHOD, AND SHEET METAL MACHINING METHOD**

(57) A processing position layout method includes: when laying out a processing position of each of supporting protrusion portions (We) to be formed in an offcut (WS) of a sheet metal (W) such that a product (WP) cut out from the sheet metal (W) lies on the offcut (WS), calculating a deflection amount ($\delta$) of a part (WR) enclosed by a contour line (T) of the product (WP) preliminarily laid out on the sheet metal (W) by considering the part (WR) to be a double end simple support beam carrying a uniformly distributed load and extending in a first direction; and setting a layout interval of the processing position of each of the supporting protrusion portions (We) based on a maximum allowable length (Lga) of the double end simple support beam carrying a uniformly distributed load, the maximum allowable length (Lga) being set such that the calculated deflection amount ($\delta$) does not exceed a first prescribed value ($\delta a$).

EP 4 628 229 A1

**FIG. 22A**

```
                    ( START )
                        |
                        v                          S1
              < PRODUCT SHAPE
     NO         MEETING LAYOUT CONDITION? >
      |                 |
      |               YES|                         S2
      |        +--------------------------+
      |        | SET TOOL GUIDE AREA ARG  |
      |        +--------------------------+
      |                 |                          S3
      |        +--------------------------+
      |        |  SET BOUNDING BOX ARB    |
      |        +--------------------------+
      |                 |                          S4
      |        +--------------------------+
      |        | LAY OUT PRE-FINAL CUT LINE TBb |
      |        +--------------------------+
      |                 |                          S5
      |        +--------------------------+
      |        | LAY OUT FINAL CUT LINE TBa |
      |        +--------------------------+
      |                 |                          S6
      |        +--------------------------+
      |        | CALCULATE LAYOUT NUMBER OF |
      |        | PROTRUSION FORMING PORTIONS P (Sub) |
      |        +--------------------------+
      |                 |                          S7
      |        +--------------------------+
      |        |  SEARCH LAYOUT POSITION  |
      |        +--------------------------+
      |                 |                          S8
      |        <    ANY
      |           INTERFERENCE AREA WITH TOOL   YES      S81
      |             GUIDE AREA ARG?        >---+  +---------------------+
      |                 |                      +->| SHIFT TO POSITION FREE |
      |               NO|                         |   FROM INTERFERENCE   |
      |                 |<-----------------------+---------------------+
      |                 |                          S9
      |        <  ANY  INTERFERENCE WITH    YES         S91
      |             BOUNDING BOX ARB?       >---+  +---------------------+
      |                 |                      +->| SHIFT TO POSITION FREE |
      |               NO|                         |   FROM INTERFERENCE   |
      |                 |<-----------------------+---------------------+
      |                 |                          S10
      |        +--------------------------+
      |        |     DETERMINE LAYOUT     |
      |        +--------------------------+
      |                 |
      +---------------->|
                        v
                    (  END  )
```

**Description**

[TECHNICAL FIELD]

The present disclosure relates to a processing position layout method and a sheet metal processing method.

[BACKGROUND ART]

There is known a combination processing machine that performs both punching and laser processing on a sheet metal. Patent Literature 1 discloses a tool for forming a sheet metal into such a shape as to prevent a part of a product to be cut out from slipping under an offcut using the combination processing machine, and a sheet metal processing method for processing a sheet metal using the tool. The tool disclosed in Patent Literature 1 includes a push-up portion that lifts up an edge portion at a prescribed position in the contour of the product by a plate thickness or more, and a coining portion that forms, by coining, a protrusion (hereinafter, a supporting protrusion) on an edge portion of the offcut corresponding to the prescribed position, the supporting protrusion being allowed to slip under the lifted edge portion of the product to support the product.

The processing to form the supporting protrusion is carried out at a plurality of points along the contour of the product, so that the product is stably maintained while lying on the supporting protrusions, and this prevents the product from slipping under the offcut. This enables a conveyor to reliably execute the work of sucking, lifting, and transferring the cut out product to a next process. The tool, which is used for forming on the offcut the supporting protrusions protruding downward from the product to support the product to be cut in this way, is hereinafter referred to as a supporting protrusion portion forming tool. Patent Literature 1 (see FIG. 15) also discloses that a bridge-like protrusion (hereinafter referred to as a movement restricting protrusion) protruding upward is formed on the offcut in order to restrict movement of a cut-out product toward the offcut in a horizontal direction. Patent Literature 2 discloses a tool for forming a protrusion including both the bridge-like movement restricting protrusion and the supporting protrusion that supports the underside of the product.

[CITATION LIST]

[PATENT LITERATURE]

[Patent Literature 1] Japanese Patent Application Laid-Open Publication No. 2020-075289
[Patent Literature 2] Japanese Patent Application Laid-Open Publication No. 2021-146341

[SUMMARY OF INVENTION]

The positions at which supporting protrusions are formed to support a product to be cut out, that is, the processing positions with the supporting protrusion portion forming tool, have conventionally been laid out on a workpiece by an operator based on a product shape, a plate thickness, and the like. For example, a non-support portion of the product, which is not supported by the supporting protrusion, has a greater downward deflection due to its own weight, and more easily slips under the offcut as the plate thickness is smaller and a beam length, when the product is considered as a cantilever beam, is longer. Therefore, the operator needs to lay out the processing positions so as to enhance the productivity by minimizing the deflection of the non-supported part and minimizing the number of processing steps using the supporting protrusion portion forming tool.

For this reason, the layout of the processing positions of the supporting protrusion portion forming tool is very difficult, greatly depends on experience, and tends to vary from operator to operator, which places a heavy load on the operators. Therefore, there are needs for a processing position layout method and a sheet metal processing method, capable of easily laying out the processing positions of the supporting protrusion portion forming tool.

A first aspect of one or more embodiments relates to a processing position layout method executed by a computer, the method comprising: when laying out a processing position of each of supporting protrusion portions to be formed in an offcut of a sheet metal such that a product cut out from the sheet metal lies on the offcut, calculating a deflection amount of a part enclosed by a contour line of the product preliminarily laid out on the sheet metal by considering the part as a double end simple support beam carrying a uniformly distributed load and extending in a first direction; and setting a layout interval of the processing position of each of the supporting protrusion portions based on a maximum allowable length of the double end simple support beam carrying a uniformly distributed load, the maximum allowable length being set such that the calculated deflection amount does not exceed a first prescribed value.

A second aspect of one or more embodiments relates to a sheet metal processing method comprising: by a computer, laying out a processing position of each of supporting protrusion portions to be formed in an offcut of a sheet metal such that a product cut out from the sheet metal lies on the offcut, by calculating a deflection amount of a part enclosed by a contour line preliminarily laid out on the sheet metal by considering the part as a double end simple support beam carrying a uniformly distributed load and extending in a first direction and setting a layout interval of the processing position of each of the supporting protrusion portions based on a maximum allowable length of the double end simple support beam carrying a uniformly distributed load, the maximum allowable length being set such that the calculated deflection amount does not exceed a first prescribed value; by a processing device, cutting a part of the contour line that is other than a pair of remaining contour lines pre-set on both end sides in the first direction; and by the processing device, forming each of the supporting protrusion portions at the laid out processing position and then cutting the pair of remaining contour lines to cut the product out of the sheet metal by the processing device.

A third aspect of one or more embodiments relates to a processing position layout method executed by a computer, the method comprising: when laying out a processing position of each of supporting protrusion portions to be formed in an offcut of a sheet metal such that a product cut out from the sheet metal lies on the offcut and laying out a processing position of each of movement restricting protrusion portions to be formed in the offcut so as to restrict movement of the product lying on the supporting protrusion portions along the offcut, the supporting protrusion portions and the movement restricting protrusion portions being formed using a tool configured to form at least one of the supporting protrusion portions and at least one of the movement restricting protrusion portions by a single processing operation at close positions, calculating a deflection amount of a part enclosed by a contour line of the product preliminarily laid out on the sheet metal by considering the part as a double end simple support beam carrying a uniformly distributed load and extending in a first direction; and setting a layout interval of the processing positions of the supporting protrusion portions and the movement restricting protrusion portions based on a maximum allowable length of the double end simple support beam carrying a uniformly distributed load, the maximum allowable length being set such that the calculated deflection amount does not exceed a first prescribed value.

The processing position layout method and the sheet metal processing method in one or more embodiments make it easy to lay out the processing positions of the supporting protrusion portion forming tool.

[BRIEF DESCRIPTION OF DRAWINGS]

[FIG. 1A] FIG. 1A illustrates a sheet metal processing system ST that executes a sheet metal processing method according to an embodiment.
[FIG. 1B] FIG. 1B is a block diagram of a control device 2 included in a sheet metal processing system ST.
[FIG. 2A] FIG. 2A is a diagram to illustrate an operation of a supporting protrusion portion forming tool K56 included in a punching unit 12 of the sheet metal processing system ST.
[FIG. 2B] FIG. 2B is a diagram to illustrate an operation subsequent to the operation in FIG. 2A.
[FIG. 2C] FIG. 2C is a diagram to illustrate an operation subsequent to the operation in FIG. 2B.
[FIG. 2D] FIG. 2D includes a part (a) that is a plan view illustrating a supporting protrusion forming portion P obtained by processing with the supporting protrusion portion forming tool K56, and a part (b) that is a sectional view at an S1Db-S1Db position in the part (a) of FIG. 2D.
[FIG. 3] FIG. 3 is a plan view illustrating a workpiece W and a contour line T of a product to be cut out from the workpiece W.
[FIG. 4A] FIG. 4A is a plan view illustrating an intermediate product WR formed by cutting a range of the contour line T excluding remaining contour lines Tz using a laser beam LS.
[FIG. 4B] FIG. 4B is a conceptual diagram in the case where the intermediate product WR is considered as a double end simple support beam carrying a uniformly distributed load.
[FIG. 5] FIG. 5 illustrates as Table 1 the relationship between a combination of plate thickness t and a length Lg, and the deflection amount δ when the intermediate product WR is considered as a double end simple support beam carrying a uniformly distributed load.
[FIG. 6] FIG. 6 illustrates as Table 2 the relationship between the plate thickness t and a distance La.
[FIG. 7] FIG. 7 illustrates as Table 3 the relationship between the plate thickness t and a maximum pitch Lb.
[FIG. 8] FIG. 8 is a plan view illustrating the intermediate product WR supported by supporting protrusion forming portions P1 to P3 formed in the workpiece W.
[FIG. 9] FIG. 9 is a plan view illustrating a workpiece WA and a contour line TA of a product to be cut out from the workpiece WA.
[FIG. 10A] FIG. 10A is an enlarged view of an extension portion TAc in the contour line TA.
[FIG. 10B] FIG. 10B is a conceptual diagram of the extension portion TAc that is considered as a cantilever beam carrying a uniformly distributed load.

[FIG. 10C] FIG. 10C is an enlarged view of a notched portion TAd in the contour line TA.

[FIG. 10D] FIG. 10D is a conceptual diagram of the notched portion TAd that is considered as a cantilever beam carrying a uniformly distributed load.

[FIG. 11] FIG. 11 illustrates as Table 4 the relationship between a combination of the plate thickness t and the length Lc of the extension portion TAc and the deflection amount $\delta 2$.

[FIG. 12] FIG. 12 illustrates as Table 5 the relationship between the plate thickness t and the maximum value of the length Lc of the extension portion TAc without the necessity of support.

[FIG. 13] FIG. 13 illustrates as Table 6 the relationship between the plate thickness t and a maximum length without layout Lca.

[FIG. 14] FIG. 14 is a plan view illustrating supporting protrusion forming portions P1 to P6 that are laid out to an intermediate product WRA.

[FIG. 15] FIG. 15 is a plan view illustrating supporting protrusion forming portions P1 to P3 that are laid out to an intermediate product WRB including holes WPa and WPb in the vicinity of the contour line.

[FIG. 16A] FIG. 16A is a diagram to illustrate an operation of a supporting protrusion portion forming tool K56A.

[FIG. 16B] FIG. 16B is a diagram to illustrate an operation subsequent to the operation in FIG. 16A.

[FIG. 16C] FIG. 16C is a diagram to illustrate an operation subsequent to the operation in FIG. 16B.

[FIG. 16D] FIG. 16D includes a part (a) that is a plan view illustrating a supporting protrusion forming portion P obtained by processing with the supporting protrusion portion forming tool K56A, and a part (b) that is a sectional view at a S16Db-S16Db position in the part (a) of FIG. 16D.

[FIG. 17] FIG. 17 is a plan view illustrating a bounding box ARB and a tool guide area ARG to be set based on the shape of the supporting protrusion portion forming tool K56A.

[FIG. 18] FIG. 18 is a diagram to illustrate a method for correcting a supporting protrusion forming and processing position for a protruding shaping portion WPc of a product WP, in which a part (a) in FIG. 18 is a plan view before correction, a part (b) of FIG. 18 is a sectional view at a S18b-S18b position in the part (a) of FIG. 18, and a part (c) of FIG. 18 is a plan view illustrating the supporting protrusion forming and processing position after correction.

[FIG. 19] FIG. 19 is a diagram to illustrate a method for correcting a supporting protrusion forming and processing position for a hole WPd of the product WP, in which a part (a) in FIG. 19 is a plan view before correction, a part (b) in FIG. 19 is a plan view after correction.

[FIG. 20] FIG. 20 is a diagram to illustrate a method for correcting a supporting protrusion forming and processing position for an X-directional extension portion WPe of the product WP, in which a part (a) in FIG. 20 is a plan view before correction, a part (b) in FIG. 20 is a plan view after correction.

[FIG. 21] FIG. 21 is a diagram to illustrate a method for setting a pre-final cut line Tb.

[FIG. 22A] FIG. 22A is a flowchart illustrating a layout method of a supporting protrusion forming and processing position.

[FIG. 22B] FIG. 22B is a flowchart of a subroutine.

[FIG. 23A] FIG. 23A is a diagram illustrating a first procedure for a processing position layout operation executed by a general layout unit 7.

[FIG. 23B] FIG. 23B is a diagram illustrating a second procedure for the processing position layout operation.

[FIG. 23C] FIG. 23C is a diagram illustrating a third procedure for the processing position layout operation.

[FIG. 23D] FIG. 23D is a diagram illustrating a fourth procedure for the processing position layout operation.

[FIG. 24A] FIG. 24A is a plan view of a movement restricting protrusion portion Wf.

[FIG. 24B] FIG. 24B is a front view of the movement restricting protrusion portion Wf as viewed from a S24B-S24B position in FIG. 24A.

[FIG. 24C] FIG. 24C is a sectional view at the S24C-S24C position in FIG. 24A.

[FIG. 24D] FIG. 24D is a diagram to illustrate the movement restricting protrusion portion Wf in a part (a) of FIG. 24D by a reference sign P21 in a part (b) of FIG. 24D.

[FIG. 25] FIG. 25 is a plan view illustrating supporting protrusion forming portions PB1 and PB2 and movement restricting protrusion forming portions P21 to P24 that are laid out to an intermediate product WR2.

[FIG. 26] FIG. 26 is a plan view illustrating supporting protrusion forming portions PB3 and PB4 and a movement restricting protrusion forming portion P27 laid out to an intermediate product WR3.

[FIG. 27] FIG. 27 is a plan view illustrating supporting protrusion forming portions PB5 and PB6 and movement restricting protrusion forming portions P28 to P31 that are laid out to an intermediate product WR4.

[FIG. 28A] FIG. 28A includes a part (a) that is a plan view to illustrate a composite protrusion forming portion PW, and a part (b) that is a diagram to illustrate a reference sign of the composite protrusion forming portion PW.

[FIG. 28B] FIG. 28B is a front view of the complex protrusion forming portion PW.

[FIG. 28C] FIG. 28C is a sectional view at a S28C-S28C position in FIG. 28A.

[FIG. 28D] FIG. 28D is a sectional view to illustrate a composite protrusion portion forming tool KW that forms a composite protrusion portion Wg.

[FIG. 28E] FIG. 28E is a sectional view illustrating a movement restricting protrusion portion Wfb formed by the composite protrusion portion forming tool KW.

[FIG. 28F] FIG. 28F is a plan view of a movement restricting protrusion forming portion PC, in which the movement restricting protrusion portion Wfb is formed.

[FIG. 28G] FIG. 28G is a diagram to illustrate a reference sign representing the movement restricting protrusion forming portion PC.

[FIG. 29] FIG. 29 is a plan view illustrating composite protrusion forming portions PW1 to PW5 and movement restricting protrusion forming portions PC1 and PC2 that are laid out to an intermediate product WR5.

[FIG. 30A] FIG. 30A is a plan view illustrating an intermediate product WR6 formed in a workpiece WC6 with slits Wm and extension slits Wm6a and Wm6b.

[FIG. 30B] FIG. 30B is a plan view illustrating supporting protrusion forming portions PB7 to PB10 and movement restricting protrusion forming portions P32 and P 33 that are formed in a workpiece WC6 having the intermediate product WR6 formed thereon.

[FIG. 30C] FIG. 30C is a plan view illustrating a product WP6 cut out in the workpiece WC6

[FIG. 30D] FIG. 30D is a plan view illustrating composite protrusion forming portions PW8 to PW11 that are formed in place of the supporting protrusion forming portions PB7 to PB10 and the movement restricting protrusion forming portions P32 and P33 in FIG. 30B.

[FIG. 31] FIG. 31 is a partially perspective view as viewed from obliquely above an arrow Y30 in FIG. 30C.

[FIG. 32] FIG. 32 is an enlarged view of a part A in FIG. 30D.

[DESCRIPTION OF EMBODIMENTS]

A processing position layout method and a sheet metal processing method according to embodiments will be described based on processing position layout operation and sheet metal processing executed by a sheet metal processing system ST. In the following description, a mode A for forming only supporting protrusions on an offcut to support the underside of a cut out product (the case of the protrusion portions only) is described as Example 1. A mode B for forming on the offcut the supporting protrusion portions as well as bridge-like movement restricting protrusion portions protruding upward to restrict a horizontal movement of the cut out product (the case of supporting protrusion portions + the movement restricting protrusion portions) is described as Example 2. A mode C (the case of a composite protrusion portion) for forming on the offcut a movement restricting protrusion portion (hereinafter referred to as a composite protrusion portion) having both the functions of supporting a cut out product and restricting its movement as described in Patent Literature 2 is described as Example 3.

(Example 1)

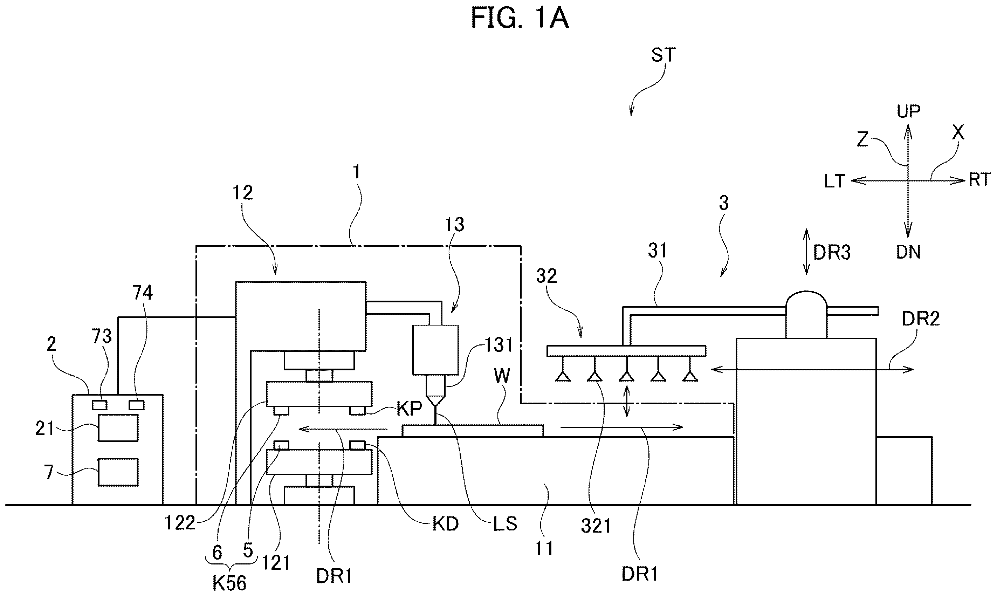

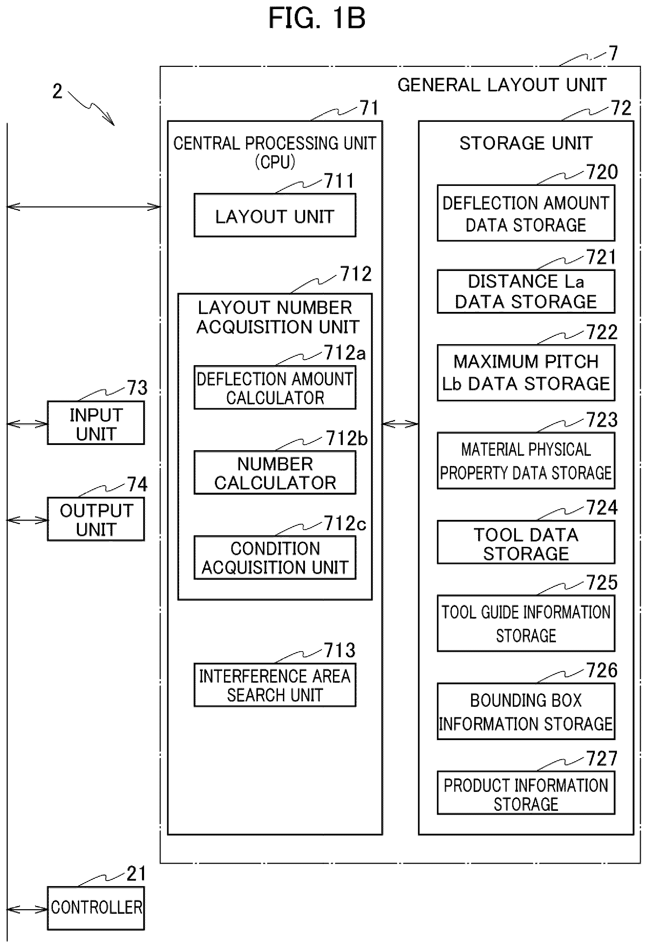

FIG. 1A illustrates a sheet metal processing system ST that executes a sheet metal processing method according to an embodiment. FIG. 1B is a block diagram of a control device 2 included in the sheet metal processing system ST. First, the overall configuration of the sheet metal processing system ST is described with reference to FIG. 1A. For the convenience of description, up, down, left, and right directions are each specified by the direction of arrows illustrated in FIG. 1A. A front-rear direction corresponds to a front-back direction of page space, in which the front side corresponds to the front side of the page space, and the rear side corresponds to the back side of the page space. A left-right direction is referred to as an X direction, a front-rear direction is referred to as a Y direction, and an up-down direction is referred to as a Z direction. In the drawings, right, left, up, down, front, and rear directions are designated by RT, LT, UP, DN, FR, and RR respectively.

The sheet metal processing system ST includes a combination processing machine 1, a control device 2, and a conveyor 3. The combination processing machine 1 includes a worktable 11, a punching unit 12, and a laser processing unit 13. A workpiece W that is a sheet metal is placed on the worktable 11. The workpiece W is grabbed by a clamper (not illustrated) and transferred in the X direction (see an arrow DR1). The workpiece W is transferred to the left from the position illustrated in FIG. 1A and supplied to the punching unit 12.

The punching unit 12 includes a lower turret 121 and an upper turret 122. The lower turret 121 is fitted with a die KD, and the upper turret 122 is fitted with a punch KP, which forms a set with the die KD. The lower turret 121 is also fitted with a supporting protrusion forming die 5, and the upper turret 122 is also fitted with a supporting protrusion forming punch 6. The set of the die KD and the punch KP cooperatively performs punching of the workpiece W supplied between the lower turret 121 and the upper turret 122 by the operation of a punching driver (not illustrated).

The supporting protrusion forming die 5 and the supporting protrusion forming punch 6 constitute a supporting protrusion portion forming tool K56 as a set of tools. The supporting protrusion portion forming tool K56 performs later-described supporting protrusion portion forming processing on the workpiece W supplied between the lower turret 121 and the upper turret 122 by the operation of the punching driver (not illustrated).

During processing by the punching unit 12, the workpiece W moves in both the X and Y directions, and processing such as punching is performed at any position of the workpiece W with a selected set of tools.

The laser processing unit 13, which is arranged above the worktable 11, includes a laser processing head 131 movable in the Y direction. The laser processing head 131 emits a laser beam LS from a lower end portion to the worktable 11. Laser processing is performed at any position on the workpiece W by moving the workpiece W on the worktable 11 in the X direction and moving the laser processing head 131 in the Y direction.

The conveyor 3 is installed on the opposite side of the punching unit 12 and the laser processing unit 13 across the worktable 11. In this example, the punching unit 12 and the laser processing unit 13 are installed on the left side and the conveyor 3 is installed on the right side of the worktable 11.

The conveyor 3 includes an arm 31 and a suction unit 32. The arm 31 moves in the X direction (see an arrow DR2) and the Z direction (an arrow DR3). The suction unit 32, which is attached to a lower tip of the arm 31, includes a plurality of sucker portions 321 that is arranged horizontally in a two dimensional manner and is directed downward. The conveyor 3 includes a suction device (not illustrated) that draws air from the tips of the sucker portions 321.

The conveyor 3 sucks and holds the workpiece W on the worktable 11 by the plurality of sucker portions 321, and conveys the workpiece W to a prescribed position by up and down movement and horizontal movement of the arm 31. In the same manner, the conveyor 3 carries in a workpiece W to be processed from the outside, and places the workpiece W on the worktable 11.

As illustrated in FIG. 1B, the control device 2 includes a controller 21, a general layout unit 7, an input unit 73, and an output unit 74. The controller 21 controls the overall operation of the sheet metal processing system ST. The general layout unit 7 comprehensively performs layout of a tool processing position to the workpiece W using the contour of a product WP to be cut out and the supporting protrusion portion forming tool K56, or the like. The input unit 73 includes a communication unit that performs communication with external devices and an input terminal that allows direct input by an operator. The output unit 74, which includes an output device such as a display, outputs an operating status, setting information, and the like of the sheet metal processing system ST.

The general layout unit 7 is a computer including a central processing unit (hereafter referred to as CPU) 71 and a storage unit 72. The CPU 71 includes a layout unit 711, a layout number acquisition unit 712, and an interference area search unit 713. The layout number acquisition unit 712 includes a deflection amount calculation unit 712a, a number calculator 712b, and a condition acquisition unit 712c. The storage unit includes a deflection amount data storage 720, a distance La data storage 721, a maximum pitch Lb data storage 722, a material physical property data storage 723, a tool data storage 724, a tool guide information storage 725, a bounding box information storage 726, and a product information storage 727.

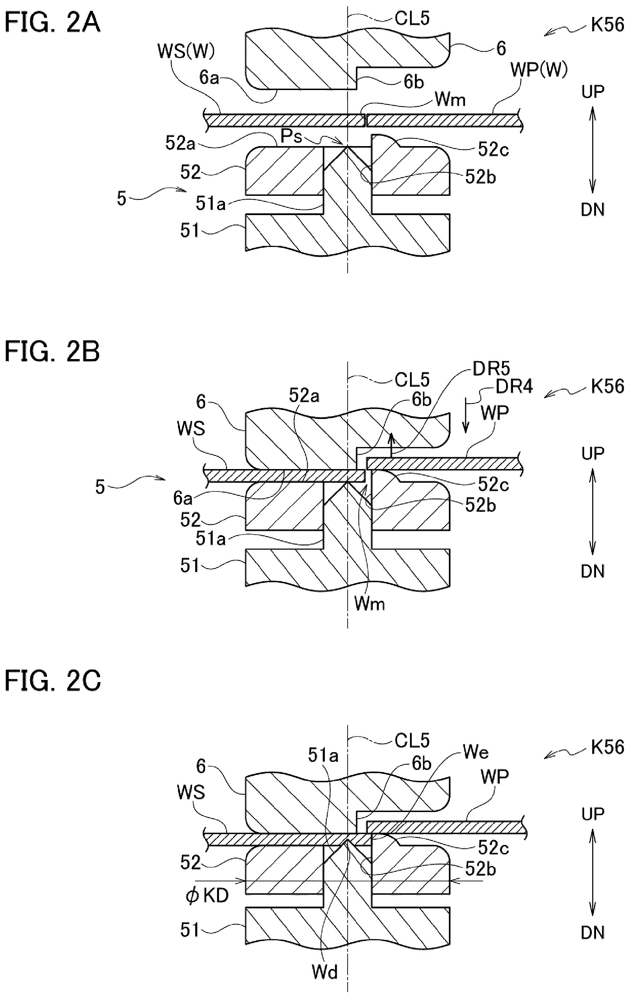

Description is now given of the configuration and operation of the supporting protrusion portion forming tool K56 with reference to FIGS. 2A to 2D. As described before, the supporting protrusion portion forming tool K56 is a set of the supporting protrusion forming die 5 and the supporting protrusion forming punch 6.

As illustrated in FIG. 2A, the supporting protrusion forming die 5 includes a die case 51 and a die ejector 52. The die case 51 is formed into a cylindrical shape. On the upper surface of the die case 51, a coining pin 51a is formed which protrudes upward along an axis line CL5 extending in the vertical direction. The coining pin 51a is formed into a square column shape that is a rectangular shape longer in the front-rear direction (front-back direction of page space) in a top view. The coining pin 51a has an upper end formed into a triangular shape that is sharpened upward with a central position in a width direction being a vertex in a cross sectional shape illustrated in FIG. 2A.

The die ejector 52, formed into a disk shape coaxial with the axis line CL5 and having the same outer diameter $\varphi KD$ (see FIG. 2C) as the die case 51, includes a through-hole 52b that is long in the front-rear direction (the front-back direction of page space) on the axis line CL5 and is rectangular as viewed from above. The die ejector 52 has an upper surface 52a that is a horizontal flat surface. In the upper surface 52a, a bank-like push-up portion 52c is formed which protrudes upward along one edge portion of the long side of the open through-hole 52b. The push-up portion 52c has a protrusion height that is equal to or more than a plate thickness of the workpiece W so as to allow application of the supporting protrusion portion forming tool K56.

The die ejector 52, which is supported by a lifting and lowering guide not illustrated, is allowed to move up and down so as to be attached to and detached from the die case 51. The die ejector 52 is also constantly energized upward by a spring not illustrated and is set such that an upper tip of the coining pin 51a does not protrude from the upper surface 52a of the die ejector 52 at an upper end position in the up and down movement range as illustrated in FIG. 2A.

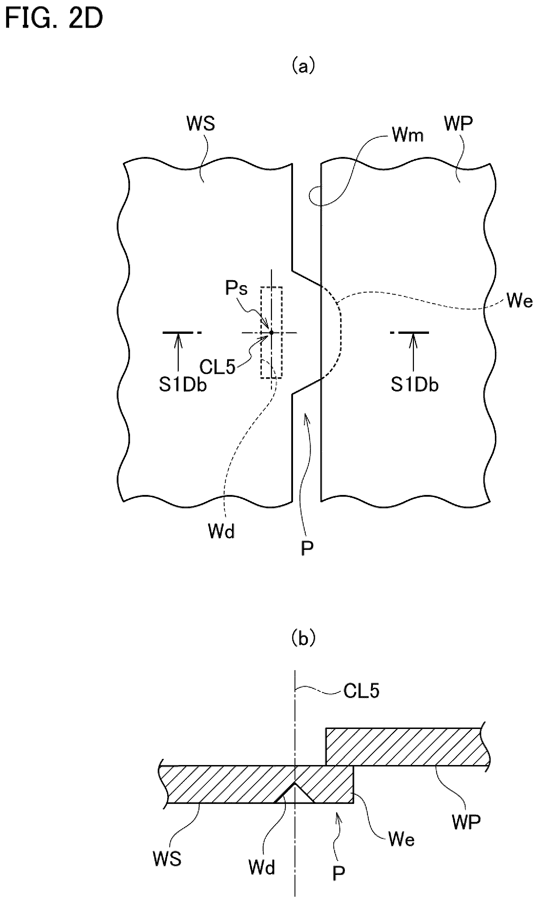

As illustrated in FIGS. 2A and 2D, the center position of the coining pin 51a in a width direction and in a longitudinal direction (the front-back direction of page space) as viewed from above is defined as a supporting protrusion processing center Ps. In this example, the supporting protrusion processing center Ps is located on the axis line CL5.

In the process of forming the supporting protrusion portion, as illustrated in FIG. 2A, the workpiece W is first inserted and positioned between the supporting protrusion forming die 5 and the supporting protrusion forming punch 6 which are separated in the up-down direction. The workpiece W to be supplied to the processing using the supporting protrusion portion forming tool K56 is subjected in advance to another process where most part of the contour line defining a part to be the product WP is cut by the laser processing unit 13 to form a slit Wm. In FIG. 2A, the right side of the slit Wm is the part to be the product WP, and the left side is the part to be an offcut (skeleton) WS. In the left-right direction in FIG. 2A, the workpiece W is positioned so that the slit Wm is located between the supporting protrusion processing center Ps and the push-up portion 52c.

Then, as illustrated in FIG. 2B, the operation of the punching driver (not illustrated) lowers the supporting protrusion forming punch 6 (arrow DR4). Accordingly, the part on the offcut WS side is held between the upper surface 52a of the die ejector 52 and the supporting protrusion forming punch 6. On the other hand, the part in the vicinity of the slit Wm on the product WP side is pushed up by a plate thickness or more by the push-up portion 52c (an arrow DR5).

In addition, when the supporting protrusion forming punch 6 descends against the upward energizing force of the die ejector 52, the die ejector 52 descends to approach the die case 51, and the coining pin 51a relatively rises through the through-hole 52b and bites into the lower surface of the offcut WS as illustrated in FIG. 2C. As a result, an indentation Wd corresponding to the tip shape of the coining pin 51a is formed on the lower surface of the offcut WS, the indentation Wd having a triangular cross section and having a rectangle shape as viewed from above (see also FIG. 2D). Along with the formation of the indentation Wd, a plastic flow of the offcut WS is generated, which causes formation of a supporting protrusion portion We which slips under the pushed-up product WP.

Even when the supporting protrusion forming punch 6 rises to be separated from the offcut WS, and the push-up portion 52c descends to be separated from the product WP after the supporting protrusion portion We is formed as described above, the product WP lies and is supported on the supporting protrusion portion We. This prevents the product WP from slipping under the offcut WS.

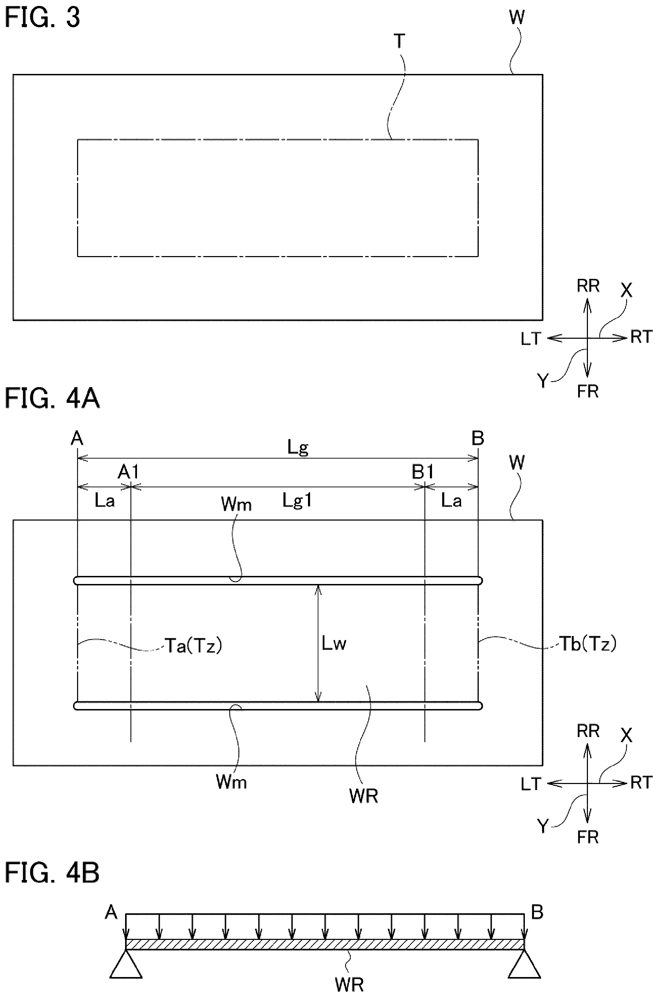

The general layout unit 7 of the control device 2 executes, as a mode A, setting of an arrangement position of the supporting protrusion portion forming tool K56 that is for forming the supporting protrusion portion We, i.e., the layout of the supporting protrusion processing center Ps, in accordance with a procedure predetermined based on the specifications of the workpiece W and the contour of the product WP, or the like. Now, the basic layout procedure by the general layout unit 7 is described by taking as an example the case where the product WP is rectangular with reference to FIGS. 3 to 8. The system may be set such that the operator can instruct the general layout unit 7 through the input unit 73 to execute layout in the mode A that allows layout of only the supporting protrusion portion Wes in advance.

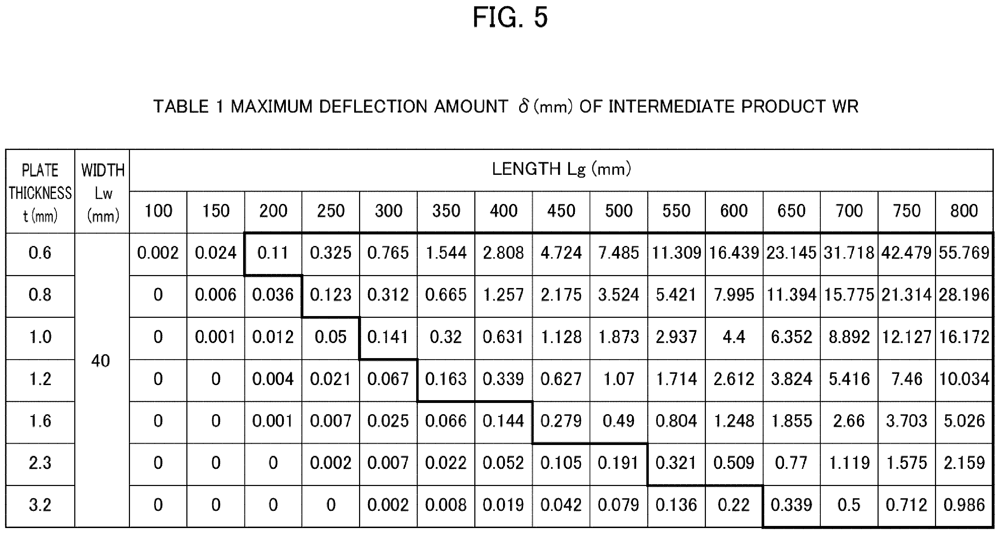

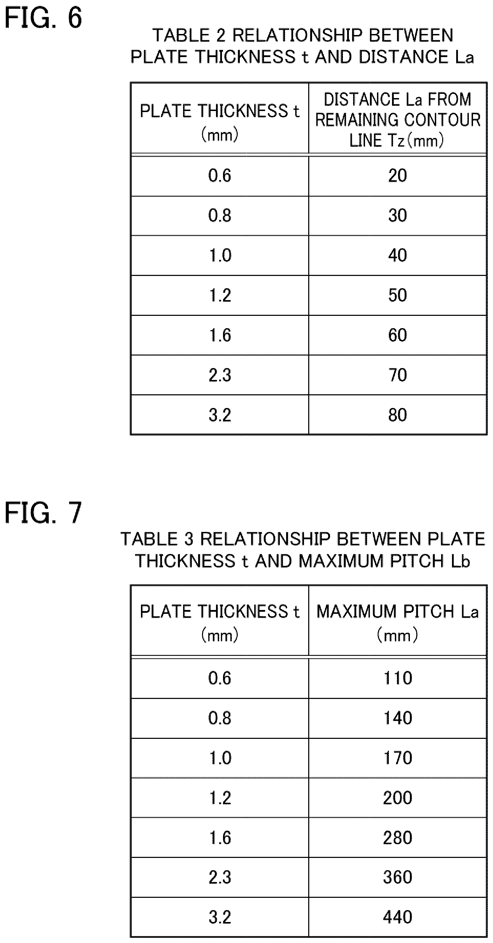

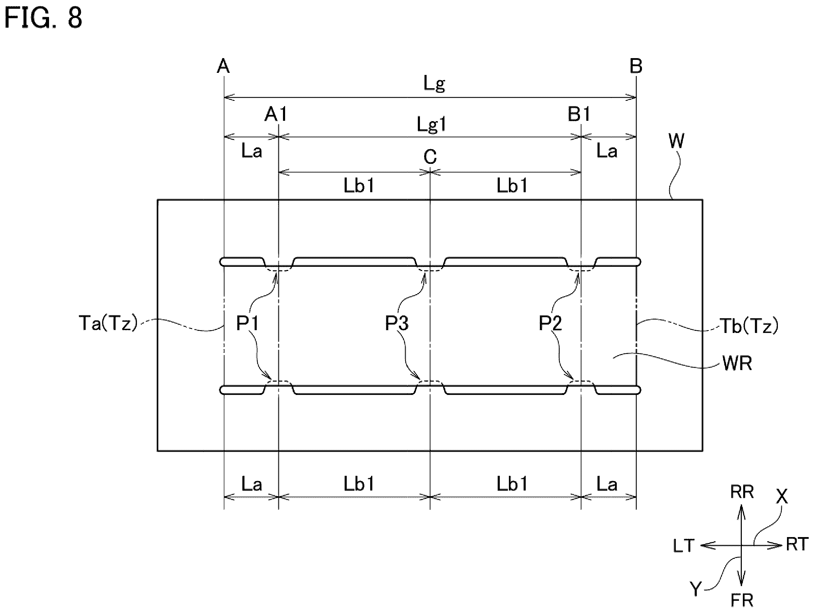

FIG. 3 is a plan view illustrating a workpiece W and a contour line T of a product to be cut out from the workpiece W. FIG. 4A is a plan view illustrating an intermediate product WR formed by cutting a range of the contour line T excluding remaining contour lines Tz using a laser beam LS. FIG. 4B is a conceptual diagram in the case where the intermediate product WR is considered as a double end simple support beam carrying a uniformly distributed load. FIG. 5 illustrates as Table 1 the relationship between a combination of the plate thickness t and the length Lg of the product and the deflection amount δ when the intermediate product WR is considered as a double end simple support beam carrying a uniformly distributed load. FIG. 6 illustrates as Table 2 the relationship between the plate thickness t and the distance La. FIG. 7 illustrates as Table 3 the relationship between the plate thickness t and the maximum pitch Lb. FIG. 8 is a plan view illustrating the intermediate product WR that is supported by supporting protrusion forming portions P1 to P3 formed in the workpiece W.

The layout procedure to be described shows an example of the operation procedure in the mode A in which the general layout unit 7 of the control device 2 lays out formation positions of the supporting protrusion portions We, in the processing to cut out a product WP from the workpiece W, to prevent the product WP from slipping under the offcut WS.

As illustrated in FIG. 3, the workpiece W is a rectangular sheet metal long in the left-right direction. For the workpiece W, a contour line T (single-dotted line), forming the outline of a part to be cut out as the product WP, is set in advance. As illustrated in FIG. 4A, a pair of long sides of the contour line T is laser cut by the laser processing unit 13 to form slits Wm. The width of the slits Wm in each diagram is exaggerated and plotted to be wider.

A pair of short sides on both end sides of the contour line T in the X direction is left uncut until the supporting protrusion portions We are formed, and a left short side is defined as a final cut line Ta to be laser cut at the end while a right short side is defined as a pre-final cut line Tb to be laser cut immediately before the final cut. The final cut line Ta and the pre-final cut line Tb final are the lines indicating the parts to be left uncut until the supporting protrusions We are formed. These lines are also referred to as remaining contour lines Tz.

As illustrated in FIG. 4A, a rectangular area with a width Lw and a length Lg, enclosed by a pair of slits Wm and the left and right final cut line Ta and pre-final cut line Tb, corresponds to an intermediate product WR. The intermediate product WR can be considered as a double end simple support beam carrying a uniformly distributed load and extending in the left-right direction (that is defined as a first direction). In this case, a maximum deflection amount δ mm of the intermediate product WR due to its own weight can be calculated by a following (Equation 1) applied to the double end simple support beam carrying a uniformly distributed load.

$$\delta = (5 \times w \times Lg4) / (384 \times E \times I) \dots \text{(Equation 1)}$$

where w is a load per unit length (N/mm), Lg is the length of the beam (mm), E is Young's modulus (MPa), and I is the moment of inertia of area (mm4).

(Equation 1) was used to obtain the maximum deflection amount δ mm of the intermediate product WR under the following conditions. The workpiece W was made of iron plate, with a specific gravity of 7.8 g/cm3 and Young's modulus E of 20000 MPa. The workpiece W had seven plate thicknesses t including 0.6 mm, 0.8 mm, 1.0 mm, 1.2 mm, 1.6 mm, 2.3 mm and 3.2 mm selected from standard plate thickness. The intermediate WR had a width Lw of 40 mm, and 15 types of length Lg ranging from 100 mm to 800 mm with 50 mm interval. The deflection amount δ mm was calculated for 105 combinations of (7 types of) plate thicknesses t of the workpiece W and (15 types of) lengths Lg of the intermediate product WR using (Equation 1), and the results were obtained as illustrated in Table 1 in FIG. 5.

Here, an allowable upper limit of the deflection amount δ of the intermediate product WR due to its own weight is set as a first prescribed value. An allowable upper limit value δa, which is the first prescribed value of the deflection amount δ, is set by multiplying a value that can hinder cutting of the product WP, i.e., a value that the deflection amount δ of the intermediate product WR due to its own weight should not exceed, by a safety factor based on empirical values. Specifically, it is clear that the allowable upper limit value δa depends on the plate thickness t when the material is the same, and here the allowable upper limit value δa is set as 10% of the plate thickness t. Therefore, the allowable upper limit value δa is 0.1 mm for the workpiece W with a plate thickness t of 1.0. Based on this way of thinking, the general layout unit 7 lays out, as a basic procedure, the supporting protrusion portions We that support the product WP so that the deflection amount δ of the intermediate product WR due to its own weight does not exceed the allowable upper limit value δa, namely, 0.1 mm.

In Table 1 in FIG. 5, the deflection amount in the range enclosed by a thick line exceeds 10% of the plate thickness t. According to Table 1, in the case of, for example, the plate thickness of 0.8 mm, the deflection amount exceeds 0.08 mm, which is 10% of the plate thickness, when the length Lg of the intermediate product WR is 250 mm or more. In other words, in the case where the length Lg is set for 50 mm interval as shown in Table 1 and the workpiece W is an iron plate with a plate thickness of 0.8 mm, the deflection amount δ becomes equal to or less than the allowable upper limit value δa when the length Lg is 200 mm or less.

When the combinations of the plate thickness t and the length Lg of the intermediate product WR are included in the range enclosed by a thick line in Table 1, the general layout unit 7 forms the supporting protrusion portions We by the supporting protrusion portion forming tool K56 in accordance with the long sides of the intermediate product WR, the number and the positions of the supporting protrusion portions to be formed being obtained by the procedure described later. In other words, the general layout unit 7 lays out the supporting protrusion forming portions P.

Outside the range enclosed by a thick line in Table 1, the maximum length, among the lengths Lg at which the deflection amount δ becomes equal to or less than the allowable upper limit value δa in each of the plate thicknesses t, is defined as a maximum allowable length Lga. For example, in the case of a plate thickness of 0.8 mm, the maximum allowable length Lga for the plate thickness of 0.8 mm is 200 mm at which the deflection amount δ is 0.036. Similarly, in Table 1, the maximum allowable length Lga for the plate thickness of 1.2 mm is 300 mm, and the maximum allowable length Lga for the plate thickness of 2.3 mm is 500 mm.

Next, the distance La is set which is the distance in the X direction from each of the remaining contour lines Tz in the intermediate product WR illustrated in Fig. 4A. The distance La is the distance indicating the range where the supporting protrusion portions We are not formed. Specifically, the distance La is set as the same distance toward the right side from the final cut line Ta and toward the left side from the pre-final cut line Tb, for every plate thickness t.

When the supporting protrusion portion We is formed using the supporting protrusion portion forming tool K56, an edge portion on the product WP side is lifted by the plate thickness or more by the push-up portion 52c of the die ejector 52 as described before. When the position of the part to be lifted, i.e., the position of the supporting protrusion forming portion P, is too close to the final cut line Ta on the left edge portion and the pre-final cut line Tb as the remaining contour lines Tz, the intermediate product WR is less susceptible to elastic deformation and is not sufficiently lifted, which may cause failure in the supporting protrusion portion forming processing.

Accordingly, the inventor experimentally determined the range in which the intermediate product WR is sufficiently lifted by the push-up portion 52c in the formation of the supporting protrusion portions We. It is clear that the range depends on the material and plate thickness of the workpiece W. As a result, it was found out that the distance La from the remaining contour lines Tz, which represents the range in which the supporting protrusion portions We are not formed, takes values shown in Table 2 in FIG. 6 when the workpiece W is an iron plate.

Thus, it was determined that the supporting protrusion portions We, which support the intermediate product WR, would not be formed in the range of the distance La from the remaining contour lines Tz on both the left and right ends in the X direction, that is, the supporting protrusion forming portions P would not be laid out.

The relationship between the plate thickness t and the distance La shown in Table 2 is similarly obtained for each material used for the workpiece W and is stored in the distance La data storage 721 of the storage unit 72 in advance.

A maximum pitch Lb is obtained which is used to set an interval between adjacent supporting protrusion portions We in the case where a plurality of supporting protrusion portions We is provided in the X direction using the distance La.

Specifically, the maximum pitch Lb is calculated by subtracting a value twice the distance La from the maximum allowable length Lga for each plate thickness t obtained from Table 1. Specifically, the maximum pitch Lb can be calculated by following (Equation 2):

$$\text{Maximum pitch Lb} = \text{maximum allowable length Lga} - \text{distance La} \times 2 \ ...$$

$$\text{(Equation 2)}$$

The maximum pitch Lb is a maximum distance between the supporting protrusion portions We adjacent in the X direction in order to keep the maximum deflection amount $\delta$ of the intermediate product WR below the allowable upper limit value $\delta a$ and to form the supporting protrusion portions We efficiently for a given plate thickness t. Table 3 illustrated in FIG. 7 indicates the results of obtaining the maximum pitch Lb for each plate thickness T. For example, in the case of the plate thickness of 1.0 mm, the maximum allowable length Lga is 250 mm from Table 1, and the distance La is 40 mm from Table 2. Therefore, according to (Equation 2), the maximum pitch Lb with the plate thickness of 1.0 mm can be obtained as 250 mm - 40 mm $\times$ 2 = 170 mm (see Table 3 in FIG. 7). The same is true for other plate thicknesses. The relationship between the obtained plate thickness t and the maximum pitch Lb is stored in the maximum pitch Lb data storage 722 of the general layout unit 7.

Next, there is obtained a range (length Lg1) where the supporting protrusion forming portions P can be laid out in the intermediate product WR of any length. Specifically, as illustrated in FIG. 4A, the distance La from a pair of right and left remaining contour lines Tz is set for the intermediate product WR having a length Lg. As a result, an X-directional length obtained by subtracting the distance La of two locations from the length Lg of the intermediate product WR is a length Lg1. Specifically, the length Lg1 can be calculated by following (Equation 3). In the case of forming the supporting protrusion portions We for the intermediate product WR, the range of the length Lg1 is the range forming the supporting protrusion portions We.

$$\text{Length Lg1} = \text{length Lg} - (\text{distance La} \times 2) \ ... \ \text{(Equation 3)}$$

Next, a formation number Q in the case of forming the supporting protrusion portions We in the range of the length Lg1 is calculated by following (Equation 5). In (Equation 5), an INT function is used to truncate the remainder to an integer in division. Specifically, the formation number Q can be calculated by (Equation 5) obtained by substituting (Equation 3) into (Equation 4).

Formation number Q = INT ((length Lg - distance La $\times$ 2) / maximum pitch Lb) + 2        (Equation 4)

$$\text{Formation number Q} = \text{INT (length Lg1 / maximum pitch Lb)} + 2 \ ... \ \text{(Equation 5)}$$

(Equation 5) indicates that the formation number Q of the supporting protrusion portions We is obtained by adding the number of the supporting protrusion portions We formed at both the ends of the length Lg1 in pair (2) to the number of supporting protrusion portions We to be formed in the range excluding both the ends of the length Lg1. For example, when the intermediate product WR has a plate thickness t of 1.2 mm and a length Lg of 500 mm, the intermediate product WR is within a thick line frame in Table 1 and therefore the intermediate product WR is determined as a target on which the supporting protrusion portions We are formed. Since the plate thickness t is 1.2 mm, the distance La is 50 mm according to Table 2. Since Table 1 indicates that the maximum allowable length Lga is 300 mm when the plate thickness t is 1.2 mm, the maximum pitch Lb is as follows using (Equation 2):

$$\text{Maximum pitch Lb} = 300 - 50 \times 2 = 200 \ \text{mm}$$

On the other hand, according to (Equation 3), the length Lg1 is 500 - 50 $\times$ 2 = 400 mm. Therefore, according to (Equation 5), the formation number Q is as follows:

$$\text{Formation number Q} = \text{INT}(400/200) + 2 = 2 + 2 = 4$$

When the resulting formation number Q is equal to or more than 3, the supporting protrusion portions We are laid out to be formed at positions that are obtained by equally dividing the number Qa by (QA + 1), the number Qa being obtained by subtracting 2 from the formation number Q. For example, when the formation number Q is 4, the supporting protrusion portions We are formed at both ends of the length Lg1 and at two divided positions obtained by dividing the range of the length Lg1 into three equal parts.

FIG. 8 is a plan view illustrating the layout positions of the supporting protrusion forming portions P when the formation number Q is 3. As illustrated in FIG. 8, the length Lg1 that allows formation of the supporting protrusion forming portions P is defined as a distance between a position A1 and a position B1, which are more inside by the distance La from the respective positions A and B, the respective positions A and B being both end positions of the intermediate product WR in the X direction. At the position A1 and the position B1 on both the ends of the length Lg1, a supporting protrusion forming portion P1 and a supporting protrusion forming portion P2 are set according to 2 out of 3 specified as the formation number Q. Since the number Qa is 1, the range of the length Lg1 is divided into two equal parts based on (Qa + 1), and the supporting protrusion forming portion P3 is set at a position C that is the divided position. Specifically, the distance between the position A1 and the position C and the distance between the position B1 and the position C are both a distance Lb1 and equal. The supporting protrusion forming portions P1 to P3 are laid out at the same positions in the X direction for each of the longitudinal edge portions in pair, the longitudinal edge portions facing each other in the front-rear direction of the intermediate product WR.

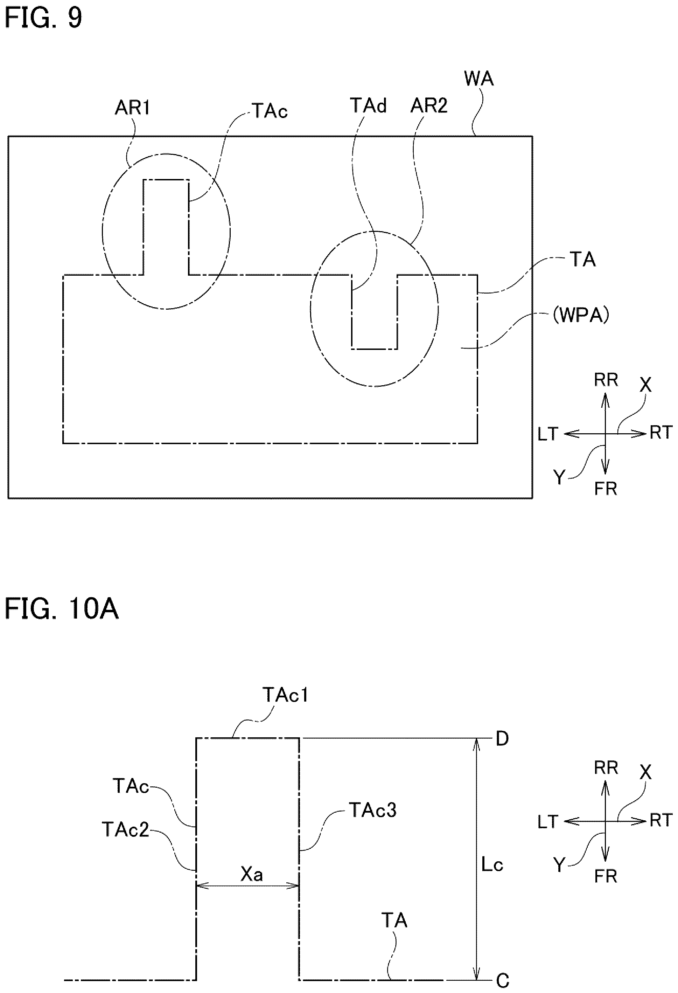

Description is now given of the procedure for laying out the supporting protrusion forming portions P in the case where the product WP is not just rectangular but is formed into a shape having a part extending in the Y direction (the second direction) that is orthogonal to the X direction (the first direction) or a part notched in the Y direction, with reference to FIGS. 9 to 14.

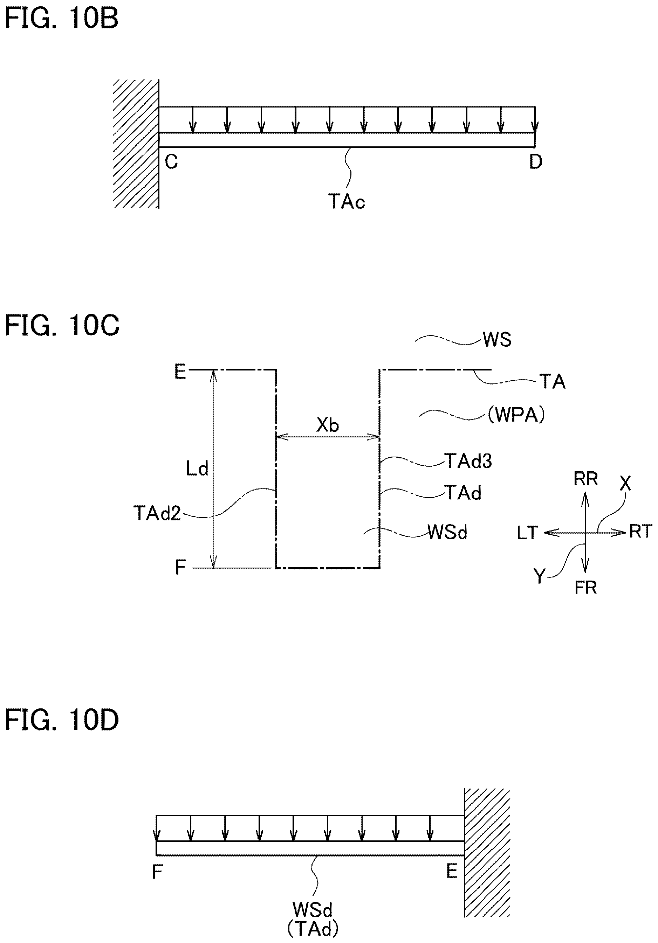

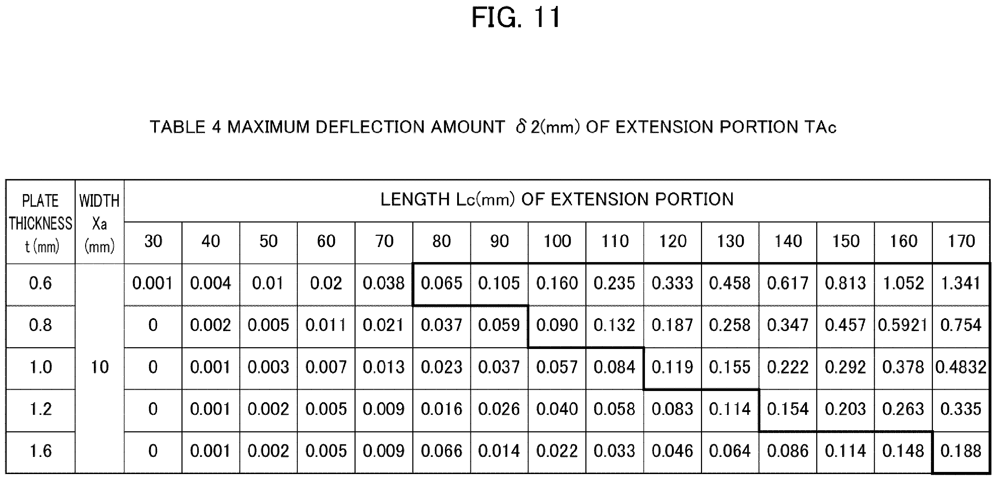

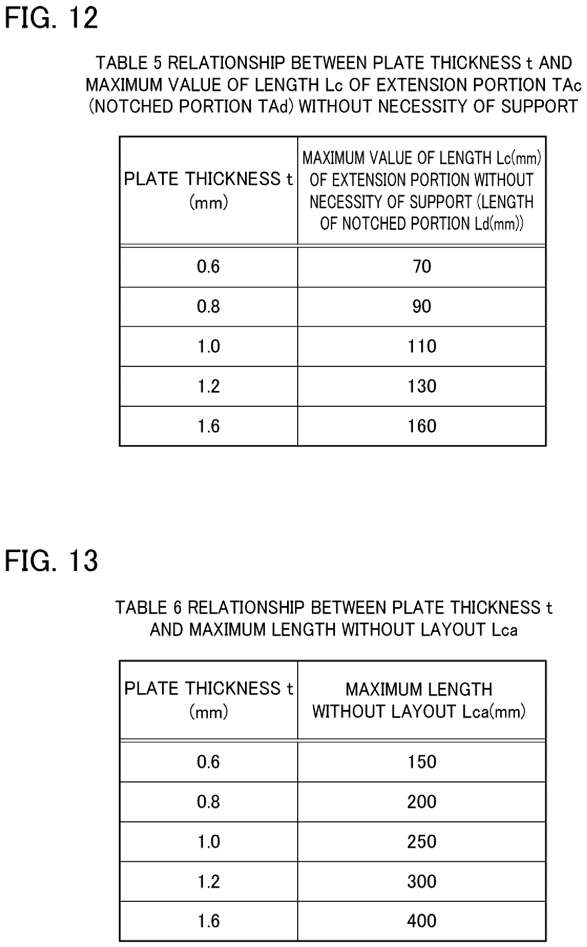

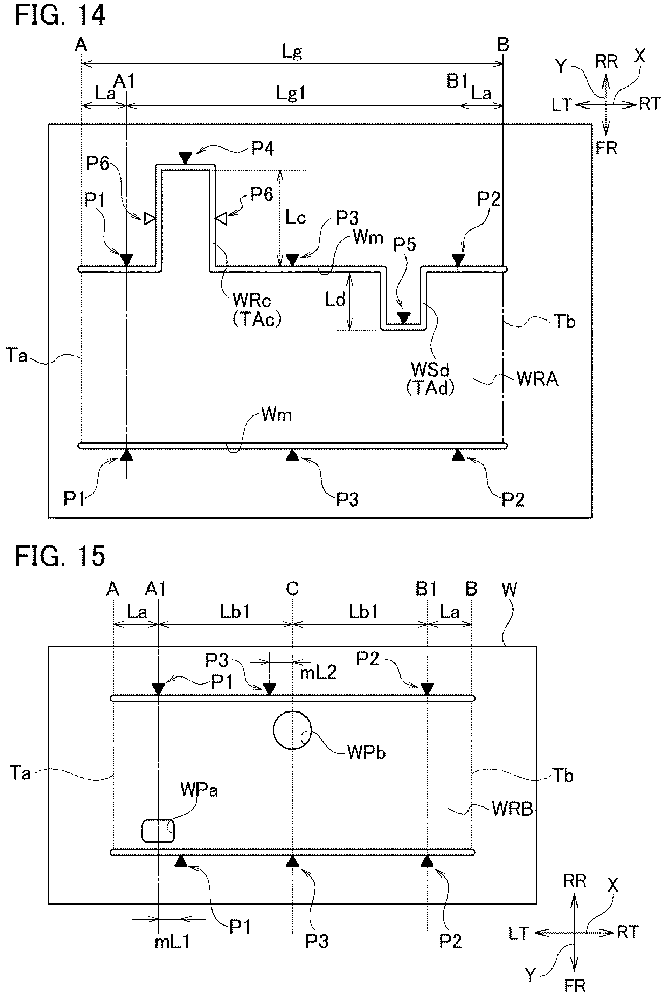

FIG. 9 is a plan view illustrating a workpiece WA and a contour line TA of a product to be cut out from the workpiece WA. FIG. 10A is an enlarged view of an extension portion TAc in the contour line TA. FIG. 10B is a conceptual diagram of the extension portion TAc that is considered as a cantilever beam carrying a uniformly distributed load. FIG. 10C is an enlarged view of a notched portion TAd in the contour line TA. FIG. 10D is a conceptual diagram of the notched portion TAd that is considered as a cantilever beam carrying a uniformly distributed load. FIG. 11 illustrates as Table 4 the relationship between a combination of the plate thickness t and a length Lc of the extension portion TAc and a deflection amount δ2. FIG. 12 illustrates as Table 5 the relationship between the plate thickness t and the maximum value of the length Lc of the extension portion TAc without the necessity of support. FIG. 13 illustrates as Table 6 the relationship between the plate thickness t and a maximum length without layout Lca. FIG. 14 is a plan view illustrating supporting protrusion forming portions P1 to P6 that are laid out to an intermediate product WRA.

As illustrated in FIG. 9, the contour line TA of the product, which is laid out to the sheet metal workpiece WA, includes the extension portion TAc that further extends as a rectangular area from a rear side extending in the X direction to a rear part in the Y direction, and the notched portion TAd that is notched as a rectangular area toward a front part in the Y direction. The area enclosed by the contour TA is the area to be cut out as a product WPA.

As illustrated in FIG. 10A that is an enlarged view of the extension portion TAc, the extension portion TAc is in a rectangular shape having the length Lc in the Y direction that is the long side and a width Xa in the X direction. As illustrated in FIG. 10B, the extension portion TAc can be considered as a cantilever beam carrying a uniformly distributed load, with a root position C as a fixed end and a tip position D as a free end.

As illustrated in FIG. 10C that is an enlarged view of the notched portion TAd, the notched portion TAd is in a rectangular shape having a length Ld in the Y direction that is the longer side and a width Xb in the X direction. The part on the offcut WS side, corresponding to the notched portion TAd, is made into an extension portion (hereinafter, an offcut extension portion WSd). Therefore, there is a possibility that the offcut extension portion WSd and its adjacent part may run over an edge portion of the notched portion Tad of the product WPA. Therefore, as illustrated in FIG. 10D, the offcut extension portion WSd is considered as a cantilever beam carrying a uniformly distributed load with a root position E as a fixed end and a tip position F as a free end, to evaluate the deflection amount in the same way as in the case of the extension portion TAc.

The maximum deflection amount δ2 mm (the first deflection amount δ2 mm) of the extension portion TAc due to its own weight is obtained by following (Equation 6), which calculates the deflection amount in a cantilever beam carrying a uniformly distributed load:

$$\delta 2 = (w \times Lg4) / (8 \times E \times I) \ldots \text{(Equation 6)}$$

where w is a load per unit length (N/mm), Lg is the length of the beam (mm), E is Young's modulus (MPa), and I is the moment of inertia of area (mm4).

The maximum deflection amount δ2 mm of the extension portion TAc was obtained using (Equation 6). The workpiece W to be used was made of iron plate, with a specific gravity of 7.8 g/cm3 and Young's modulus E of 20000 MPa.

The workpiece W had five types of plate thickness t including 0.6 mm, 0.8 mm, 1.0 mm, 1.2 mm, and 1.6 mm selected from standard plate thickness. The extension portion TAc had a width Xa of 10 mm, and 15 types of length Lg ranging from 30 mm to 170 mm with 10 mm interval. The deflection amount $\delta 2$ mm was calculated for 75 combinations of (5 types of) plate thickness t of the workpiece W and (15 types of) length Lg of the extension portion TAc using (Equation 6), and the results were obtained as shown in Table 1 in FIG. 11.

Here, an allowable upper limit is set for the deflection amount $\delta 2$ of the extension portion TAc due to its own weight. An allowable upper limit value $\delta 2a$ of the deflection amount $\delta 2$ is set by multiplying a value that can hinder cutting of a part corresponding to the extension portion TAc in the product WP, i.e., a value (second prescribed value) that the deflection amount $\delta 2$ of the extension portion TAc due to its own weight should not exceed, by a safety factor on an empirical basis. Here, the allowable upper limit value $\delta 2a$ is set to a value that is 10% of the plate thickness t based on the same way of thinking as in the allowable upper limit value $\delta a$ in the intermediate product WR. In Table 4 of FIG. 11, the combinations of the plate thickness t and the length Lc included in the range enclosed by a thick line are the combinations that in which the deflection amount $\delta 2$ exceeds the allowable upper limit value $\delta 2a$. When the extension portion TAc falls within the combinations included in the range enclosed by the thick line, a supporting protrusion forming portion P is formed at a tip edge portion TAc1 that is a tip part of the extension portion TAc using the supporting protrusion portion forming tool K56. Specifically, a supporting protrusion forming portion P4 is laid out to the tip edge portion TAc1 as illustrated in FIG. 14.

In the range enclosed by the thick line in Table 4 of FIG. 11 obtained as described above, the maximum value of the length LC at a certain plate thickness t is the maximum length of the extension portion TAc without the necessity of laying out the supporting protrusion forming portion P at the tip edge portion TAc1. The maximum length for each plate thickness t calculated in this way is shown in Table 5 of FIG. 12. For example, according to Table 4, when the plate thickness t is 0.8 mm, the maximum length Lg without the necessity of the supporting protrusion forming portion P at the tip edge portion TAc1 is 90 mm, and when the plate thickness t is 1.2 mm, the maximum length Lg is 130 mm. Table 5 also applies to the notched portion TAd.

When the supporting protrusion forming portion P (P4 in FIG. 14) is laid out to the tip edge portion TAc1 as described above, the extension portion TAc can be considered as a double end simple support beam carrying a uniformly distributed load and extending in the Y direction. Accordingly, whether or not it is necessary to support lateral edge portions TAc2 and TAc3, which are longitudinal lateral edge portions of the extension portion TAc, by the supporting protrusion forming portion P is determined by replacing the results in Table 1 with the combination of the plate thickness t and the length LC of the extension portion TAc. Specifically, the length Lg in Table 1 is replaced with the length Lc of the extension portion TAc. The results are shown in Table 6 of FIG. 13.

In Table 1, in the case where, for example, the plate thickness t is 1.2 mm, it is not necessary to lay out the supporting protrusion forming portion P to the lateral edge portions TAc2 and TAc3 of the extension portion TAc unless the length Lc of the extension portion TAc exceeds 300 mm. The maximum value of the length Lc without the necessity of laying out the supporting protrusion forming portion P is referred to as a maximum length without layout Lca.

When the length Lc of the extension portion TAc exceeds the maximum length without layout Lca, the formation number Q2 of the supporting protrusion forming portions P to be laid out to each of the lateral edge portions TAc2 and TAc3 is calculated using following (Equation 7):

Formation number Q2 = INT (length Lc / maximum length without layout Lca)                    (Equation 7)

FIG. 14 illustrates an intermediate product WRA obtained by forming the slits Wm in a longitudinal part of the contour line TA on the workpiece WA illustrated in FIG. 9, and a layout example of the supporting protrusion forming portions P (P1 to P6) by the method described above. In FIG. 14, the supporting protrusion forming portions P are illustrated in a triangular shape for easy understanding. In FIG. 14, the X direction and the Y direction are depicted with different ratios.

In this example, the intermediate product WRA has a thickness t of 0.8 mm and a length Lg of 300 mm. Since the distance La is 30 mm according to Table 2 (FIG. 6), the length Lg1 is 240 mm. On the other hand, since the maximum pitch Lb is 140 mm according to Table 3 (FIG. 7), the formation number Q is 3 by (Equation 5). Specifically, in the entire shape of the intermediate product WRA, the supporting protrusion forming portions P1 and the supporting protrusion forming portions P2 are laid out at the positions A1 and A2 in FIG. 14, respectively, and the supporting protrusion forming portions P3 are laid out at a middle position between the positions A1 and B1.

Now, the extension portion TAc is examined. The extension portion TAc has a length Lc of 230 mm. Since it is determined from Table 5 (FIG. 12) that the extension portion TAc needs support at the tip edge portion, the supporting protrusion forming portion P4 is laid out to the tip edge of an intermediate extension portion WRc corresponding to the extension portion TAc in the intermediate product WR as illustrated in FIG. 14.

Since the supporting protrusion forming portion P4 is laid out, the intermediate extension portion WRc can be considered as a double end simple support beam. Accordingly, based on the deflection amount (second deflection amount) of the intermediate extension portion WRc, the maximum length without layout Lca of layout of 200 mm can be obtained as a third specified value from Table 1. Therefore, as shown in Table 6 (FIG. 13), the length Lc (230 mm) of the intermediate extension portion WRc is longer than the maximum length without layout Lca (200 mm) in the case of the plate thickness t (0.8 mm). Therefore, the intermediate extension portion WRc is determined to need the layout of the supporting protrusion forming portions P to the lateral edge portions extending in the Y direction, which correspond to the lateral edge portions TAc2 and TAc3. The formation number Q2 for layout is calculated to be 1 according to (Equation 7). As a result of calculation, the supporting protrusion forming portion P6 illustrated by a white triangle in FIG. 14 is laid out to each of the lateral edge portions.

Next, the notched portion TAd and the offcut extension portion WSd corresponding to the notched portion TAd in the offcut WS are examined. Table 6 (FIG. 13) also similarly applies to the notched portion TAd.

The length of the offcut extension portion WSd in the Y direction corresponds to the length Ld of the notched portion TAd, the length Ld being set to 130 mm. Since it is determined from Table 5 (FIG. 12) that the offcut extension portion WSd needs support at the tip edge portion, the supporting protrusion forming portion P5 is laid out as illustrated in FIG. 14.

Then, with the supporting protrusion forming portion P5 being laid out, the offcut extension portion WSd is considered as a double end simple support beam. Accordingly with reference to Table 6 (FIG. 13), the length Ld (130 mm) of the offcut extension portion WSd is shorter than the maximum length without layout Lca (200 mm) in the case of the plate thickness t (0.8 mm). Therefore, it is determined that the lateral edge portions extending in the Y direction, which correspond to the lateral edge portions TAc2 and TAc3, do not need the layout of the supporting protrusion forming portion P.

In this way of thinking, the supporting protrusion forming portions P1 to P6 are laid out to the intermediate product WRA. The data from Tables 1 to 6 are stored in the storage unit 72 in advance. Of these data, the data in Table 1 and Table 4 are stored in the deflection amount data storage 720, the data in Table 2 is stored in the distance La data storage 721, and the data in Table 3 is stored in the maximum pitch Lb data storage 722.

When the intermediate product WR includes a through-hole or a shaping portion that protrudes in the thickness direction, which is formed in advance in another process, these parts may cause failure in supporting protrusion portion forming processing if these parts are in the vicinity of the supporting protrusion forming portions P laid out as described above. Therefore, in such a case, the general layout unit 7 performs correction to shift the layout positions of the supporting protrusion forming portions P. The position correction is described with reference to FIGS. 15 to 20.

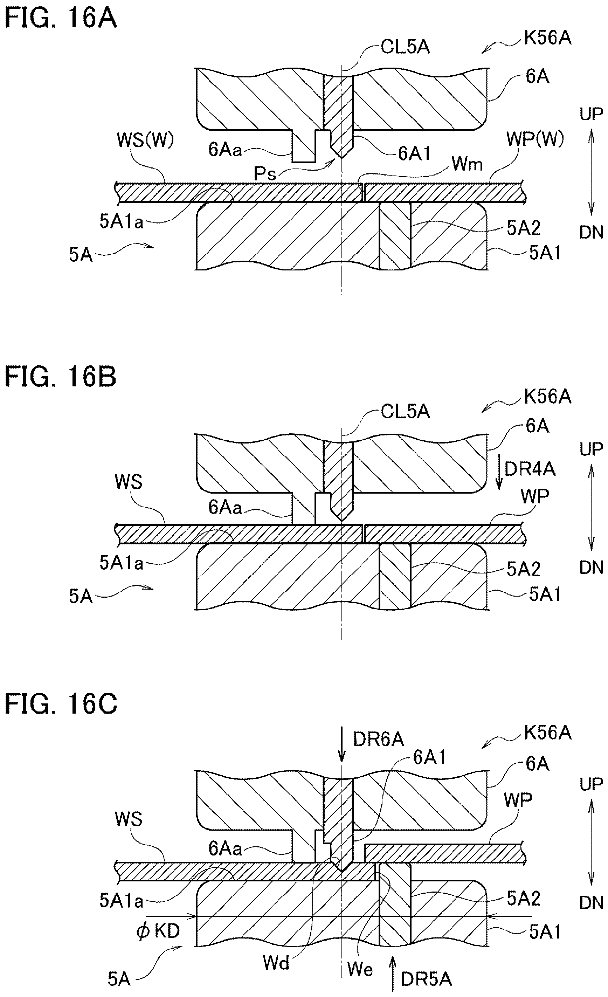

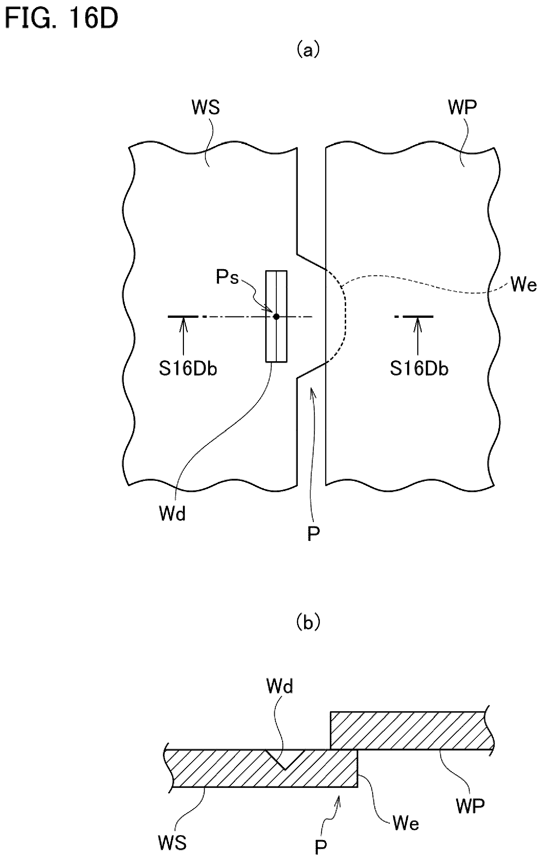

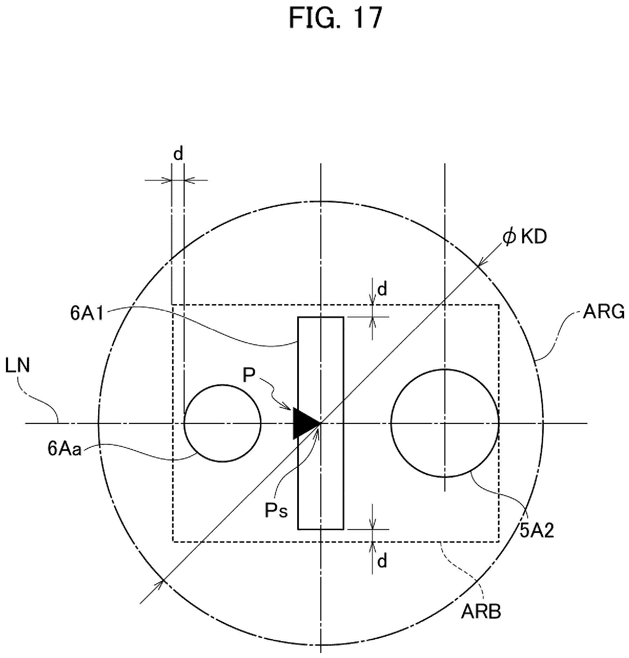

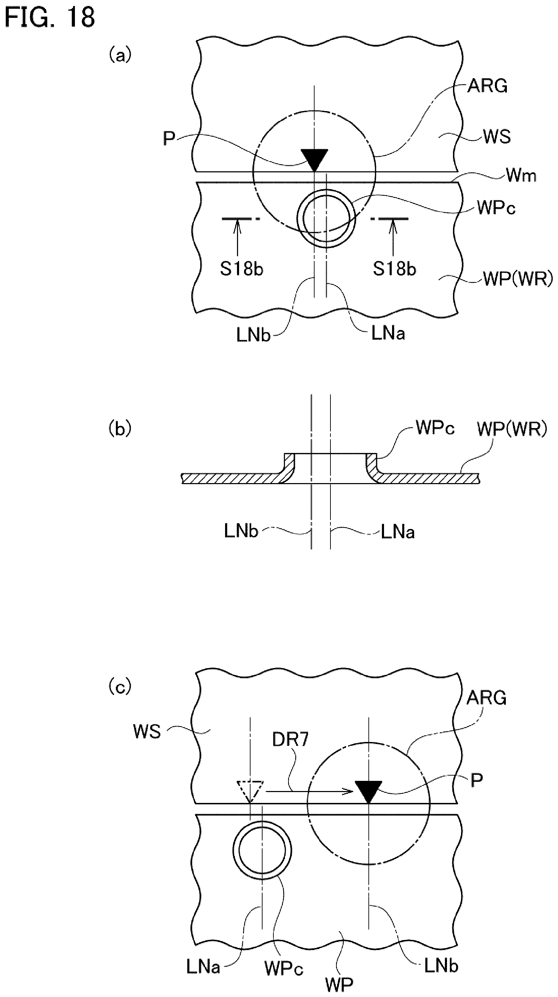

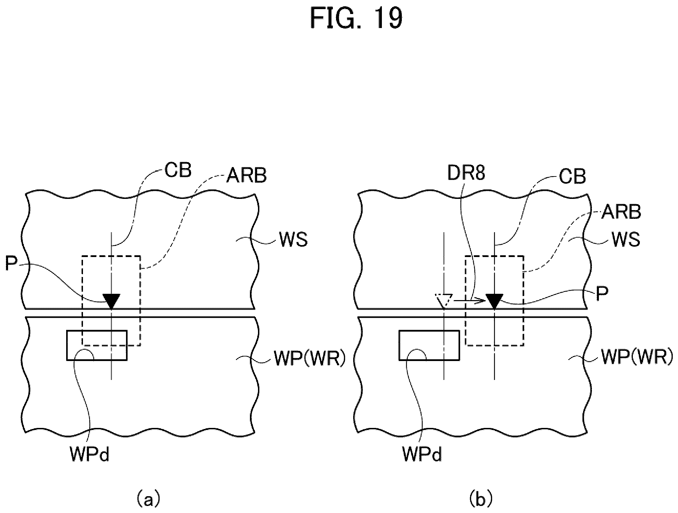

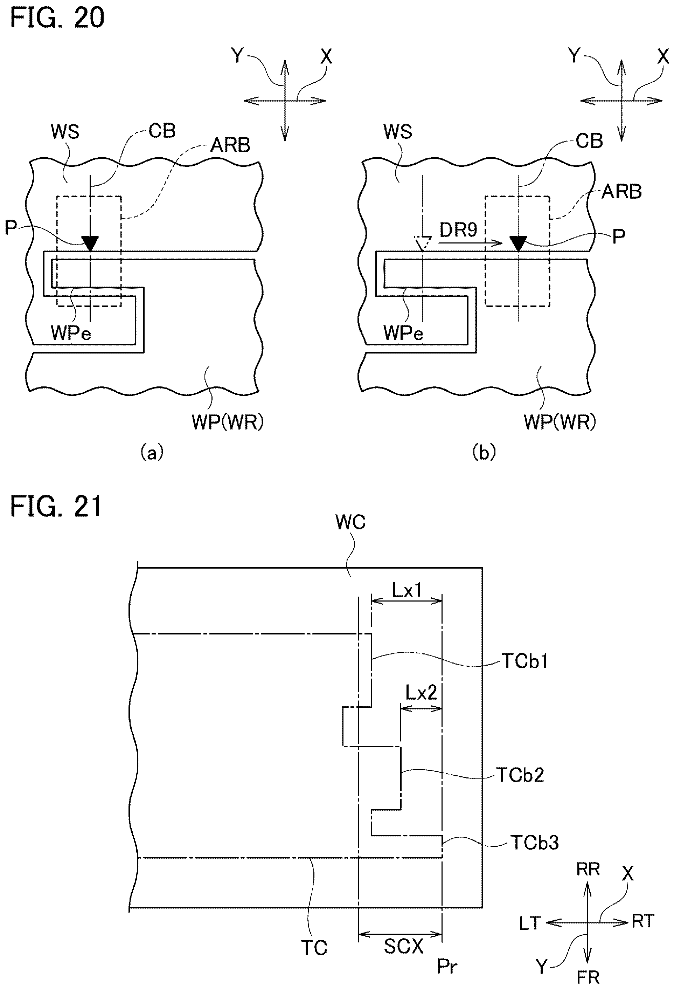

FIG. 15 is a plan view illustrating the supporting protrusion forming portions P1 to P3 that are laid out to an intermediate product WRB including holes WPa and WPb in the vicinity of the contour line. FIG. 16A is a diagram to illustrate an operation of a supporting protrusion portion forming tool K56A. FIG. 16B is a diagram to illustrate an operation subsequent to the operation in FIG. 16A. FIG. 16C is a diagram to illustrate an operation subsequent to the operation in FIG. 16B. FIG. 16D includes a part (a) that is a plan view illustrating a supporting protrusion forming portion P obtained by processing with the supporting protrusion portion forming tool K56A. FIG. 16D includes a part (b) that is a sectional view at a S16Db-S16Db position in the part (a) of FIG. 16D. FIG. 17 is a plan view illustrating a bounding box ARB and a tool guide area ARG to be set based on the shape of the supporting protrusion portion forming tool K56A. FIG. 18 is a diagram to illustrate a method for correcting a supporting protrusion forming and processing position for the protruding shaping portion WPc of the product WP. A part (a) in FIG. 18 is a plan view before correction, a part (b) of FIG. 18 is a sectional view at a S18b-S18b position in the part (a) of FIG. 18, and a part (c) of FIG. 18 is a plan view illustrating the supporting protrusion forming and processing position after correction. FIG. 19 is a diagram to illustrate a method for correcting a supporting protrusion forming and processing position for a hole WPd of the product WP. A part (a) in FIG. 19 is a plan view before correction, and a part (b) in FIG. 19 is a plan view after correction. FIG. 20 is a diagram to illustrate a method for correcting a supporting protrusion forming and processing position for an X-directional extension portion WPe of the product WP. A part (a) in FIG. 20 is a plan view before correction, and a part (b) in FIG. 20 is a plan view after correction.

First, the overview of the position correction is described with reference to FIG. 15. FIG. 15 illustrates the case where the supporting protrusion forming portion P1 laid out on the front side and the supporting protrusion forming portion P3 laid out in a central part on the rear side are at positions relatively close to the holes WPa and WPb, respectively, in an intermediate product WRB including through-holes WPa and WPb. In this case, the general layout unit 7 corrects the relevant layout positions of the pertinent supporting protrusion forming portion P1 and supporting protrusion forming portion P3 to a position shifted by a distance mL1 to the right and to a position shifted by a distance mL2 to the left, respectively.

The position correction is executed for the though-holes when there is interference with the bounding box ARB, and is executed for the shaping portions when there is interference with the tool guide area ARG. The bounding box ARB and the tool guide area ARG depend on the shape of the supporting protrusion portion forming tool (for example, the supporting protrusion portion forming tool K56).

Here, the bounding box ARB and the tool guide area ARG are described by taking the supporting protrusion portion forming tool K56A as an example. The supporting protrusion portion forming tool K56A has a modified structure of the supporting protrusion portion forming tool K56 described before.

The supporting protrusion portion forming tool K56A is a combination of a supporting protrusion forming die 5A and a supporting protrusion forming punch 6A. As illustrated in FIG. 16A, the supporting protrusion forming die 5A includes a die case 5A1 and a push-up pin 5A2.

The die case 5A1 is formed into a cylindrical shape. The push-up pin 5A2 moves up and down at a position that is biased to one side (right side in FIG. 16A) from an axis line CL5A of the die case 5A1, and appears upward from the upper surface of the die case 5A1. The die case 5A1 has an upper surface 5A1a that is a horizontal flat surface. The push-up pin 5A2 has a protrusion height that is equal to or more than the plate thickness of the workpiece W to which the supporting protrusion portion forming tool K56A is applied.

The supporting protrusion forming punch 6A is formed into a cylindrical shape and arranged so that its axis line is coincident with the axis line CL5A. The supporting protrusion forming punch 6A includes a pressing protrusion 6Aa at a position that is biased in an opposite direction (left side of FIG. 16A) of the push-up pin 5A2 from the axis line CL5A, the pressing protrusion 6Aa protruding downward. The supporting protrusion forming punch 6A includes a coining pin 6A1 that protrudes downward in a normal state and further moves up and down in a downward orientation.

The coining pin 6A1 is formed into a square column shape that takes a rectangular shape longer in the front-rear direction (front-back direction of page space) as viewed from below. The coining pin 6A1 has a lower end formed into a triangular shape that is sharpened downward with a central position in a width direction being a top in a cross sectional shape illustrated in FIG. 16A.

As illustrated in FIG. 16D, the center position of the coining pin 6A1 in the width direction and in the longitudinal direction (the front-back direction of page space) as viewed from above is defined as a supporting protrusion processing center Ps. Specifically, in this example, the supporting protrusion processing center Ps is located on the axis line CL5A

In the process of forming the supporting protrusion portion, as illustrated in FIG. 16A, the workpiece W is first inserted and positioned between the supporting protrusion forming die 5A and the supporting protrusion forming punch 6A which are separated in the up-down direction. The workpiece W to be supplied to processing with the supporting protrusion portion forming tool K56A is subjected in advance to another process where most part of the contour line defining a part to be the product WP is cut by the laser processing unit 13 to form the slits Wm. In FIG. 16A, the right side of the slit Wm is the part to be the product WP, and the left side is the part to be an offcut (skeleton) WS. In the left-right direction in FIG. 16A, the workpiece W is positioned so that the slit Wm is located between the supporting protrusion processing center Ps and the push-up pin 5A2.

Then, as illustrated in FIG. 16B, the operation of the punching driver (not illustrated) lowers the supporting protrusion forming punch 6A (see an arrow DR4A), and the part on the offcut WS side is held between the upper surface 5A1a of the die case 5A1 and the pressing protrusion 6Aa of the supporting protrusion forming punch 6A. Then, as illustrated in FIG. 16C, the part in the vicinity of the slit Wm on the product WP side is pushed up by a plate thickness or more by the push-up pin 5A2 (see an arrow DR5A).

Then, the coining pin 6A1 descends (see an arrow DR6A) and bites into the upper surface of the offcut WS, so that an indentation Wd corresponding to the tip shape of the coining pin 6A1 is formed, the indentation Wd having a triangular cross section and having a rectangle shape as viewed from above (see FIG. 16D). Along with the formation of the indentation Wd, a plastic flow of the offcut WS is generated, which causes formation of a supporting protrusion portion We which slips under the pushed up product WP.

Even when the supporting protrusion forming punch 6A rises and is separated from the offcut WS, while the push-up pin 5A2 descends and the die case 5A1 is separated from the product WP after the supporting protrusion portion We is formed, the product WP does not slip under the offcut WS since the product WP rests on the supporting protrusion portion We.

As illustrated in FIG. 17, the bounding box ARB (dashed line) and the tool guide area ARG (single-dotted line) are set as two-dimensional areas for the supporting protrusion portion forming tool K56A.

The bounding box ARB is set as an area to determine whether there is interference with the through-hole on the product side, from the viewpoint of whether or not the operation to push up the product WP and the coining operation to the offcut WS are hindered. Specifically, the bounding box ARB is set as an area to be made to correspond to a non-opening part of the workpiece W that is a sheet metal, in accordance with the shape of the supporting protrusion portion forming tool K56A or the like that forms the supporting protrusion portion We. Specifically, in the case of the supporting protrusion portion forming tool K56A, the bounding box ARB is set as a rectangular area that includes in an enclosing manner the area occupied by the coining pin 6A1 as well as the area of the pressing protrusion 6Aa and the area of the push-up pin 5A2 as viewed from above. As illustrated in FIG. 17, a margin of enclosing is 0 (zero) to a distance d (about 0.2 mm).

The tool guide area ARG is set as an area to determine whether there is interference with a shaping portion (projecting portion) on the product side, from the viewpoint of whether or not holding the workpiece W by the supporting protrusion portion forming tool K56A is hindered. Specifically, the tool guide area ARG is set as an area to be made to correspond to a flat part of the workpiece W that is a sheet metal in the formation of the supporting protrusion portions We, in accordance with the shape of the supporting protrusion portion forming tool K56A or the like that forms the supporting protrusion portion We. Specifically, in the case of the supporting protrusion portion forming tool K56A, the tool guide area ARG is set to have a diameter corresponding to the larger one of the outer diameters of the die case 5A1 and the supporting protrusion forming punch 6A. In this example, since the die case 5A1 and the supporting protrusion forming punch 6A have the same outer diameter of $\varphi$KD (see FIG. 16C), the tool guide area ARG is set as a circular area of $\varphi$KD.

The aforementioned triangle mark, which indicates the layout position of the supporting protrusion forming portion P in a simplified manner, is set to have a vertex coinciding with the position of the supporting protrusion processing center Ps and to be oriented so that the base of the triangle is on the side of the pressing protrusion 6Aa, as illustrated in FIG. 17.

Information such as the dimensions of each member of the supporting protrusion portion forming tool K56A is stored in the tool data storage 724 in the storage unit 72 in advance. The information of the tool guide area ARG and the information of the bounding box ARB are also stored in the tool guide information storage 725 and the bounding box information storage 726 in the storage unit 72, respectively.

Now, the position correction based on the information of the tool guide area ARG and the bounding box ARB is described in detail. When a protruding shaping portion WPc as illustrated in parts (a) and (b) of FIG. 18 is formed in the intermediate product WR to be the product WP, the interference area search unit 713 in the general layout unit 7 determines whether or not the tool guide area ARG corresponding to the supporting protrusion forming portion P laid out in the procedure described before and the protruding shaping portion WPc interfere each other as viewed from above. When there is interference as illustrated in the part (a) of FIG. 18, the interference area search unit 713, as illustrated in the part (c) of FIG. 18, shifts (corrects) the position of the supporting protrusion forming portion P to a position where the tool guide area ARG and the protruding shaping portion WPc do not interfere with each other and newly lays out the supporting protrusion forming portion P (see an arrow DR7).

When a hole WPd that is a that is a though-hole as illustrated in the part (a) of FIG. 19A is formed in the intermediate product WR to be the product WP, the interference area search unit 713 in the general layout unit 7 determines whether or not the bounding box ARB corresponding to the supporting protrusion forming portion P laid out in the above-described procedure and the hole WPd interfere each other as viewed from above. When there is interference as illustrated in the part (a) of FIG. 19, the interference area search unit 713, as illustrated in the part (b) of FIG. 19, shifts (corrects) the position of the supporting protrusion forming portion P to a position where the bounding box ARB and the hole WPd do not interfere with each other and newly lays out the supporting protrusion forming portion P (see an arrow DR8).

When the intermediate product WR to be the product WP includes an X-directional extension portion WPe (second extension portion) that is a part narrowly extending in the X direction as illustrated in the part (a) of FIG. 20, the position of the supporting protrusion forming portion P may also be corrected. Specifically, the interference area search unit 713 in the general layout unit 7 determines whether or not the bounding box ARB corresponding to the supporting protrusion forming portion P laid out in the above-described procedure and the X-directional extension portion WPe interfere each other as viewed from above. When there is interference as illustrated in the part (a) of FIG. 20, the interference area search unit 713, as illustrated in the part (b) of FIG. 20, shifts (corrects) the position of the supporting protrusion forming portion P to a position where the bounding box ARB and the X-directional extension portion WPe do not interfere with each other and newly lays out the supporting protrusion forming portion P (see an arrow DR9).

Based on the basic layout method of the supporting protrusion forming portion P described in detail above, the general layout unit 7 lays out the supporting protrusion forming portion P so that the product WP does not slip under the offcut WS. An example of the layout procedure is described with reference to FIGS. 21 to 23D.

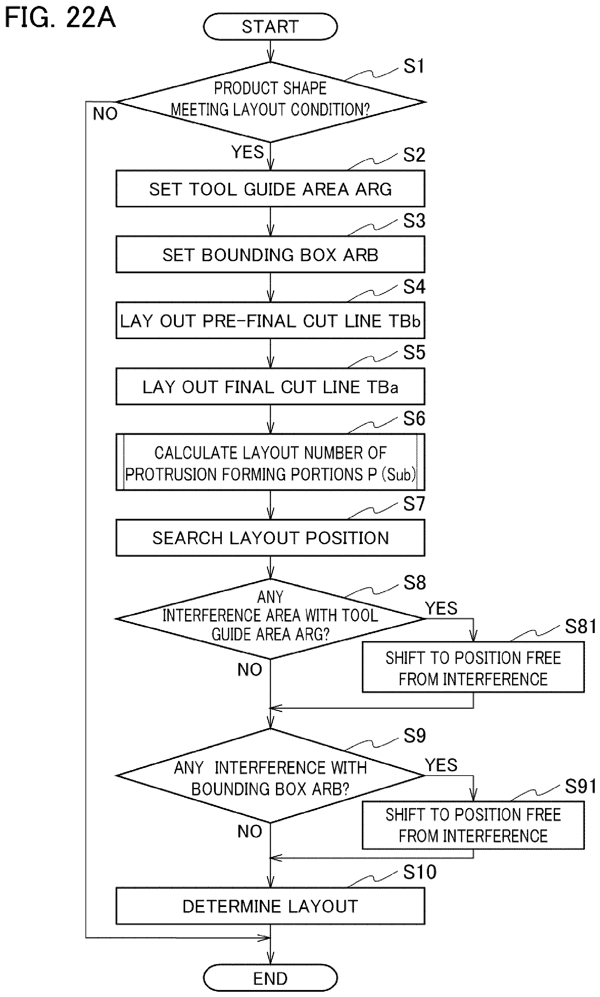

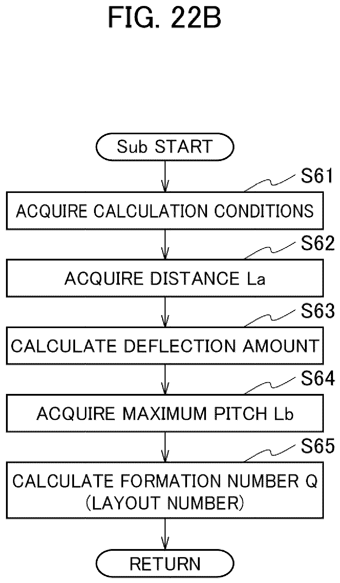

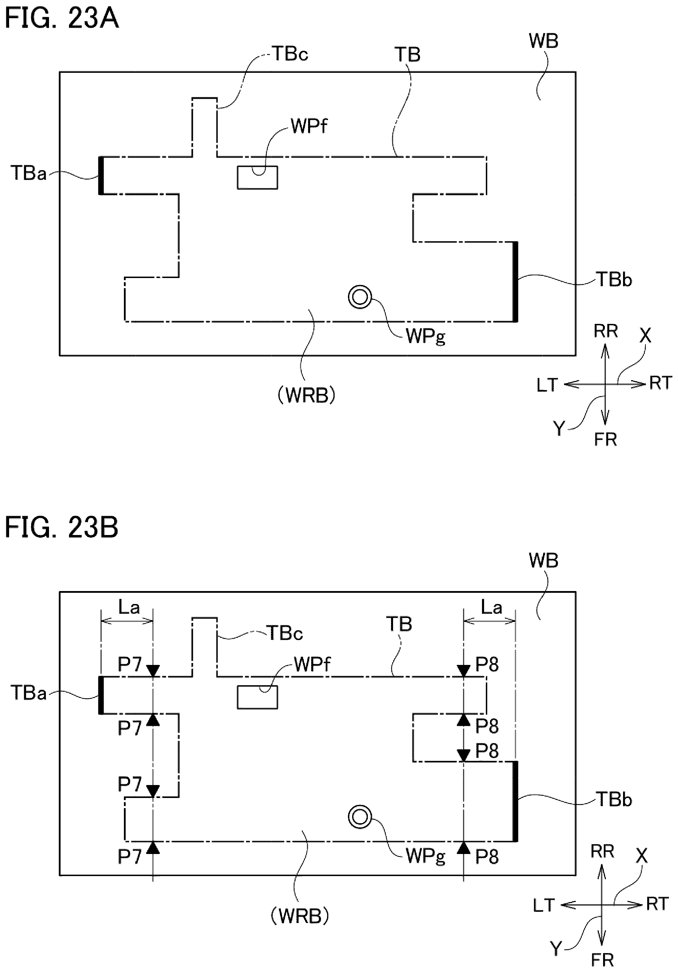

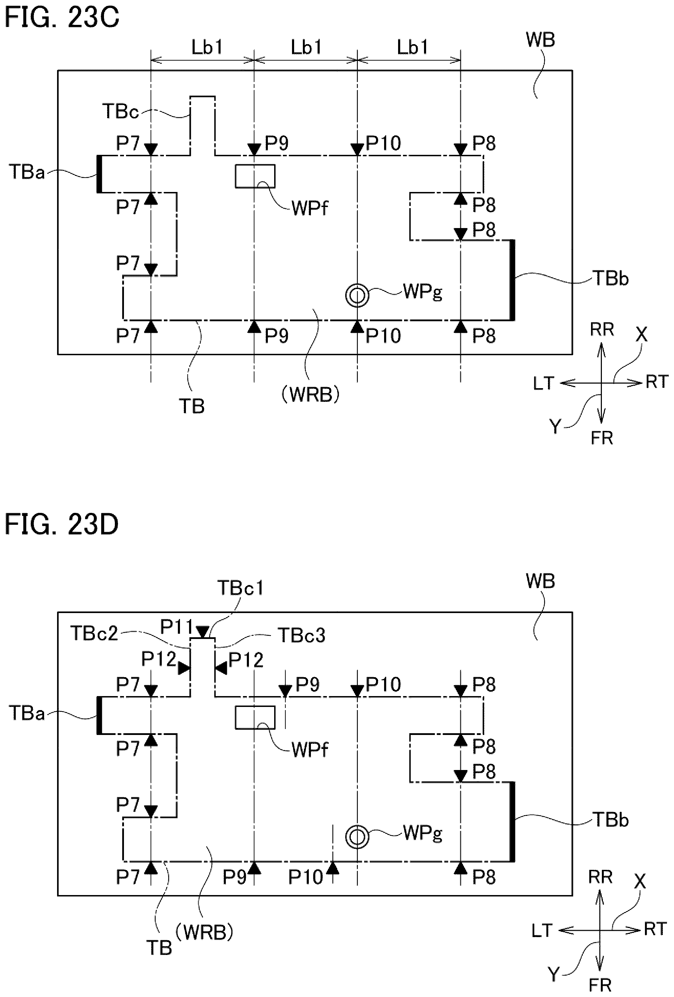

FIG. 21 is a diagram to illustrate a method for setting a pre-final cut line Tb. FIG. 22A is a flowchart showing a layout method of the supporting protrusion forming and processing position. FIG. 22B is a flowchart of a subroutine. FIG. 23A is a diagram illustrating a first procedure for a processing position layout operation executed by the general layout unit 7. FIG. 23B is a diagram illustrating a second procedure for the processing position layout operation. FIG. 23C is a diagram illustrating a third procedure for the processing position layout operation. FIG. 23D is a diagram illustrating a fourth procedure for the processing position layout operation.

Described below is an example of cutting out a product WPB from a workpiece WB. The product WPB has an outline indicated by a contour line TB (see FIG. 23A). Information such as the shape of the contour line TB is stored in the product information storage 727 of the storage unit 72 in advance. In addition, information such as the material and physical properties of the workpiece W is also stored in the material physical property data storage 723 of the storage unit 72 in advance.

As illustrated in the flowchart of FIG. 22A, the layout unit 711 in the general layout unit 7 determines whether or not the product shape meets the conditions of the layout to be executed (S1). The determination is performed based on predetermined conditions, such as whether or not the contour line TB can be considered to be in a roughly rectangular shape having a long side in the X direction so that the supporting protrusion forming portion P can be laid out.

When the layout unit 711 determines NO in (S1), the layout operation is ended. When determining YES, the layout unit 711 select a supporting protrusion portion forming tool to create a supporting protrusion forming portion P, and sets the tool guide area ARG (S2) and the bounding box (S3) in accordance with the selected tool as described with reference to FIG. 17. The information of the set tool guide area ARG and the information of the set bounding box ARB are stored in the tool guide information storage 725 and the bounding box information storage 726, respectively. The supporting protrusion portion forming tool is selected from the supporting protrusion portion forming tools K56 and K56A described above, and other tools of the same kind.

The layout unit 711 performs, for the contour line TB, layout of a final cut line TBa (final cut trace) that is finally cut by laser cutting in the contour line TB (S5) and layout of a pre-final cut line TBb (right divided trace) that is cut immediately before the final cut line TBa (S4). The order of execution of (S4) and (S5) is not limited and may be reversed.

In order to allow the arm 31 of the conveyor 3 to enter above the workpiece WB during cutting, a contour line, which constitutes an edge portion of the contour line TB on the side (left side in this example) opposite from the installation side of the conveyor 3 and which extends in the Y direction, is selected as the final cut line TBa as illustrated in FIG. 23A. Therefore, a contour line, which constitutes an edge portion on the installation side (right side in this example) of the conveyor 3 and which extends in the Y direction, is selected as the pre-final cut line TBb.

When the shape of both the end portions of the contour line TB is not a simple single line but has an recess and a projection in the X direction as illustrated in FIG. 23A, the layout is performed in accordance with pre-set conditions. For example, assume the case where, as shown by a contour line TC illustrated in FIG. 21, there are three contour lines extending in the Y direction: a contour line TCb3 located at a rightmost position Pr in a right end portion of the contour line TC in the X direction; and contour lines TCb2 and TCb1 distanced by Lx2 and Lx1 from the position Pr, respectively. The length of the contour lines TCb1 to TCb3 in the Y direction is TCb1 > TCb2 > TCb3.

In this case, the range of a distance SCX in the X direction from the position Pr is set as a search range SCX, and a contour line having the maximum length in the Y direction within the search range is set as the pre-final cut line. For example, when, as illustrated in FIG. 21, the search range SCX that determines the search range is set larger than the distance Lx1, the layout unit 711 sets (lays out) the contour line TCb1 as the pre-final cut line. When the search range SCX is set to be less than the distance Lx1 and be equal to or more than the distance Lx2, the contour line TCb2 is set as the pre-final cut line.

As the conditions of the pre-final cut line, a minimum value is set for the length of the pre-final cut line in the Y direction. The search range SCX may be so set that, for example, the search range always includes a contour line having a length equal to or more than the minimum value so as to satisfy the conditions of the pre-final cut line. The same is true for the layout of the final cut line. The layout conditions in (S1) may include whether or not a contour line that can be set as the final cut line and the pre-final cut line can be searched.

According to the above procedure, the layout unit 711 sets here, for the contour line TB illustrated in FIG. 23A, the final cut line TBa indicated by a thick line at the left edge, and sets the pre-final cut line TBb indicated by a thick line at the right edge. The intermediate product WRB having the contour line TB includes an extension portion TBc extending rearward, a though-hole WPf formed at the position adj acent to the contour line TB in another process, and a protruding shaping portion WPg protruding to the front side of the page space.

The layout number acquisition unit 712 in the general layout unit 7 calculates the formation number Q (layout number) of the supporting protrusion forming portions P (S6). The procedure of (S6) is shown by the flowchart in FIG. 22B using (Equation 1) to (Equation 5) as a subroutine, for example.

In FIG. 22B, the condition acquisition unit 712c in the layout number acquisition unit 712 acquires the conditions used in (Equation 1) to (Equation 5) by referring to the storage unit 72 (S61). For example, for (Equation 1), the condition acquisition unit 712c acquires information about the product such as a beam length Lg and the plate thickness t from the product information storage 727, and acquires the condition about the material, such as Young's modulus E, from the material physical property data storage 723. The condition acquisition unit 712c also acquires the distance La corresponding to the plate thickness t by referring to the distance La data storage 721 in the storage unit 72 (S62).

Based on the conditions obtained by the condition acquisition unit 712c, the deflection amount calculation unit 712a calculates the deflection amount $\delta$ by (Equation 1) (S63). The deflection amount calculation unit 712a further acquires the maximum pitch Lb using the calculated deflection amount $\delta$ or the like, or based on the information already stored in the maximum pitch Lb data storage 722 (S64). The number calculator 712b applies the acquired distance La and maximum pitch Lb to (Equation 5) to calculate the formation number Q (S65), and then returns to (S6).

The layout unit 711 searches the layout positions of the supporting protrusion forming portions P based on the formation number Q calculated by the number calculator 712b (S7). Here, the case where the formation number Q is calculated to be 4 is described. First, as illustrated in FIG. 23B, the layout unit 711 sets two out of four supporting protrusion forming portions P specified by the formation number Q. Specifically, the layout unit 711 sets the supporting protrusion forming portion P7 at the position shifted by the distance La to the right from the final cut line TBa. Since this position exists at four points in the contour line TB, the supporting protrusion forming portion P7 is set for each of these four points. Since the position shifted by the distance La to the left from the pre-final cut line TBb also exists at four points on the contour line TB, a supporting protrusion forming portion P8 is also set for each of these four points.

Then, as illustrated in FIG. 23C, the layout unit 711 lay outs supporting protrusion forming portions P9 and P10 corresponding to the remaining two supporting protrusion forming portions specified by the formation number Q.

Specifically, the section between the supporting protrusion forming portions P7 and the supporting protrusion forming portions P8 is divided into three equal parts by a distance Lb1, and the supporting protrusion forming portions P9 and the supporting protrusion forming portion P10 are set at the respective boundary positions. Since these two divided boundary positions each exist at two points, the supporting protrusion forming portion P9 and the supporting protrusion forming portion P10 are set for each of these two points.

The layout unit 711 also searches the presence or absence of any extension portion and notched portion in the contour line TB. As a result of the search, when any one of the extension portion and the notched portion is present, the layout number acquisition unit 712 determines whether or not the layout of the supporting protrusion forming portion P to the extension portion and the notched portion is needed, and when the layout is needed, the layout number acquisition unit 712 obtains the formation number based on the aforementioned procedure using (Equation 6) and (Equation 7).

In the contour line TB illustrated in FIG. 23C, the extension portion TBc is a search target. In this example, as illustrated in FIG. 23D, the layout number acquisition unit 712 lays out, to the extension portion TBc, a supporting protrusion forming portion P11 at a tip edge portion TBc1 of the extension portion TBc, and lays out supporting protrusion forming portions P12 and P12 to the respective lateral edge portions TBc2 and TBc3.

Next, the interference area search unit 713 determines, for the contour line TB, the presence or absence of interference between the laid out supporting protrusion forming portions P1 to P12 and the hole, the protruding shaping portion, and the X-directional extension portion. The interference area search unit 713 determines the presence or absence of interference between the protruding shaping portion WPg and the tool guide area ARG used at the time of forming the supporting protrusion forming portions P10 laid out in the vicinity of the protruding shaping portion WPg (S8). When the presence (Yes) is determined in (S8), the interference area search unit 713 performs correction to shift the supporting protrusion forming portion P10 in the vicinity of the protruding shaping portion WPg to a non-interference position as illustrated in FIG. 23D (S81). When the absence (No) is determined in (S8), the process proceeds to a next procedure (S9).

The interference area search unit 713 determines the presence or absence of interference between the hole WPf and the bounding box ARB used at the time of forming the supporting protrusion forming portion P9 laid out in the vicinity of the hole WPf (S9). When the presence (Yes) is determined in (S9), the interference area search unit 713 performs correction to shift the supporting protrusion forming portion P9 in the vicinity of the protruding shaping portion WPg to a non-interference position as illustrated in FIG. 23D (S91). When the absence (No) is determined in (S9), the process proceeds to a next procedure (S10).

The interference area search unit 713 selects the direction to shift, out of leftward and rightward in (S81) and (S91) so as to achieve the non-interference state with less amount of shift.

The interference area search unit 713 determines, for two X-directional extension portions at a left edge portion and two X-directional extension portions at a right edge portion in the contour line TB illustrated in FIG. 23C, the presence or absence of interference with the bounding box ARB of the supporting protrusion forming portions P7 and P8. In this example, no interference is determined and the position correction of the supporting protrusion forming portions P7 and P8 are not executed.

When the layout unit 711 has corrected the positions of the laid out supporting protrusion forming portions P7 to P12 as described above, the layout unit 711 determines the positions after correction (S10). With this, the layout operation by the general layout unit 7 is ended.

After the layout operation is ended, the control device 2 supplies the workpiece W to the laser processing unit 13 where the slits Wm are formed in a part other than the remaining contour lines by the laser processing head 131, so that the intermediate product WR is obtained. Then, the control device 2 supplies the workpiece W in which the slits Wm is formed to the punching unit 12, where the supporting protrusion portions We are formed at the processing positions laid out as the supporting protrusion forming portions P by using the supporting protrusion portion forming tools K56, K56A, or the like to ensure that the intermediate product WR rests on the supporting protrusion portions We. Then, the remaining contour lines Tz are cut by the laser processing head 131 to obtain the product WP.

As described in detail above, the method for laying out the processing positions of the supporting protrusion forming portions P executed by the general layout unit 7 makes it possible to automatically lay out the supporting protrusion forming portions P to the workpiece W when the shape of the product WP satisfies the prescribed conditions. This makes it easy to lay out the processing positions using the supporting protrusion portion forming tools K56 and K56A. More specifically, the effect of automatically laying out the supporting protrusion forming portions P to prevent the product WP from slipping under the offcut WS is always effective without variation, regardless of the experience of the operator, so that the burden on the operator is reduced.

(Example 2)

Example 2 relates to a sheet metal processing method in a mode B for forming a supporting protrusion portion We and a movement restricting protrusion portion Wf using the same sheet metal processing system ST as Example 1. The supporting protrusion portion We is formed by the procedure in the mode A in the example 1.

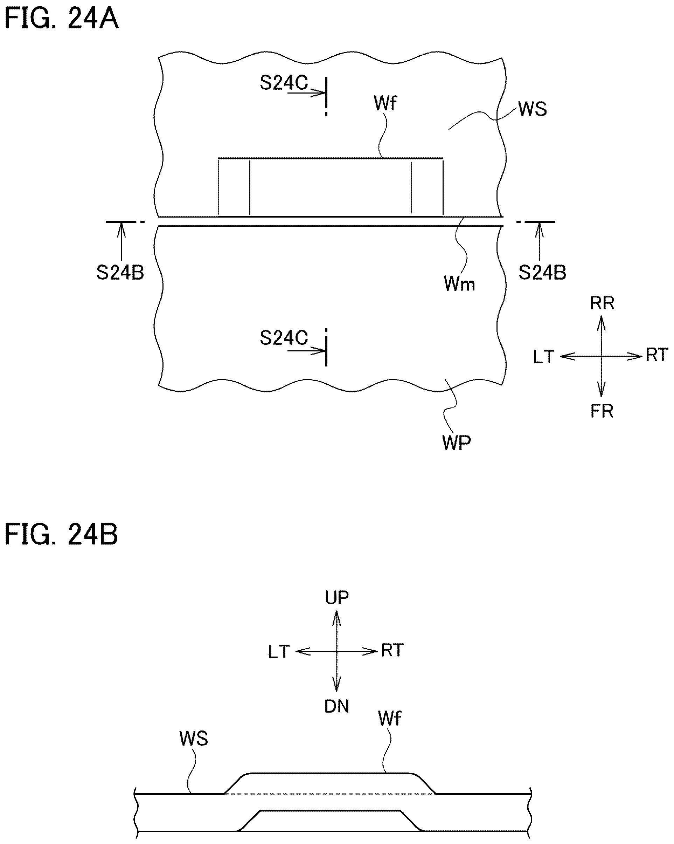

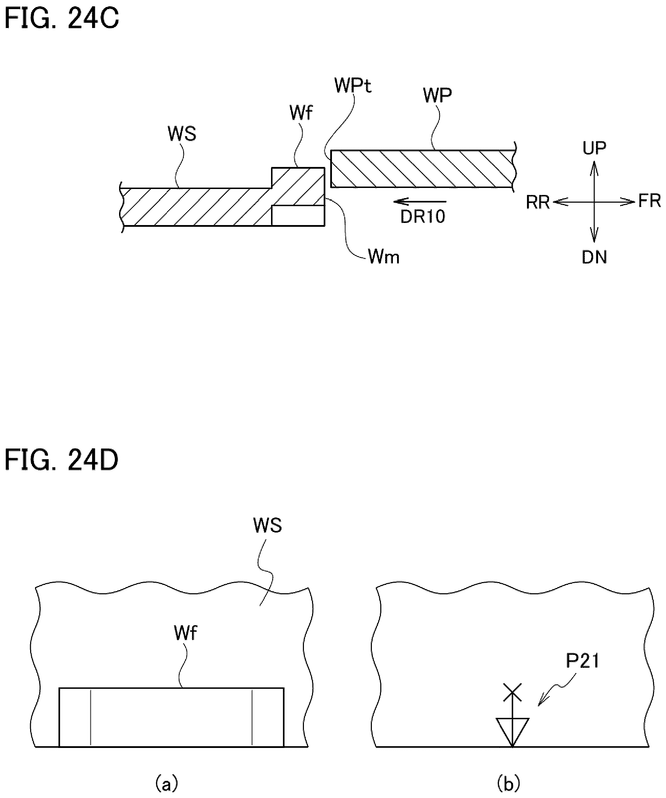

First, the movement restricting protrusion portion Wf is described with reference to FIGS. 24A to 24D. FIG. 24A is a plan view of the movement restricting protrusion portion Wf. FIG. 24B is a front view of the movement restricting protrusion portion Wf as viewed from a S24B-S24B position in FIG. 24A. FIG. 24C is a sectional view at a S24C-S24C position in FIG. 24A. FIG. 24D is a diagram to illustrate a reference sign of the movement restricting protrusion portion Wf. Each of the front, rear, left, and right directions are specified by the arrows in FIG. 24A. The upper side is the front side of the page space and the lower side is the rear side of the page space.

As illustrated in FIGS. 24A to 24C, the movement restricting protrusion portion Wf is formed along an edge portion of the offcut WS facing the slit Wm so as to protrude upward in a bridge-like manner to a height that is less than a plate thickness, by typical half-shear processing. The tool used for half-shear processing is set in advance on the lower turret 121 and the upper turret 122 of the punching unit 12.

As illustrated in FIG. 24C, the product WP is lifted upward by the supporting protrusion portion We (not illustrated) formed in the method of the Example 1 by a plate thickness of the supporting protrusion portion We. Therefore, when the product WP is about to move rearward (see an arrow DR10), an end face WPt of the product WP comes into contact with the movement restricting protrusion portion Wf and restricts the movement to the rear side. This means that the movement restricting protrusion portion Wf restricts the horizontal movement of the product WP beyond the slits Wm. In other words, the movement restricting protrusion portion Wf restricts the horizontal movement of the product WP toward the movement restricting protrusion portion Wf through the contact.

Therefore, two pairs of movement restricting protrusion portions Wf may be formed: one pair is for restricting the movement of the product WP in a first oriented direction in a horizontal first direction and for restricting the movement in a second oriented direction opposite to the first oriented direction; and one pair for restraining the movement of the product WP in a third oriented direction that is one oriented direction of an second direction that is horizontally orthogonal to the first direction and for restricting the movement in a fourth oriented direction opposite to the third oriented direction. This allows the horizontal movement of the product WP supported by the supporting protrusion portions We at the position lifted upward by the plate thickness.

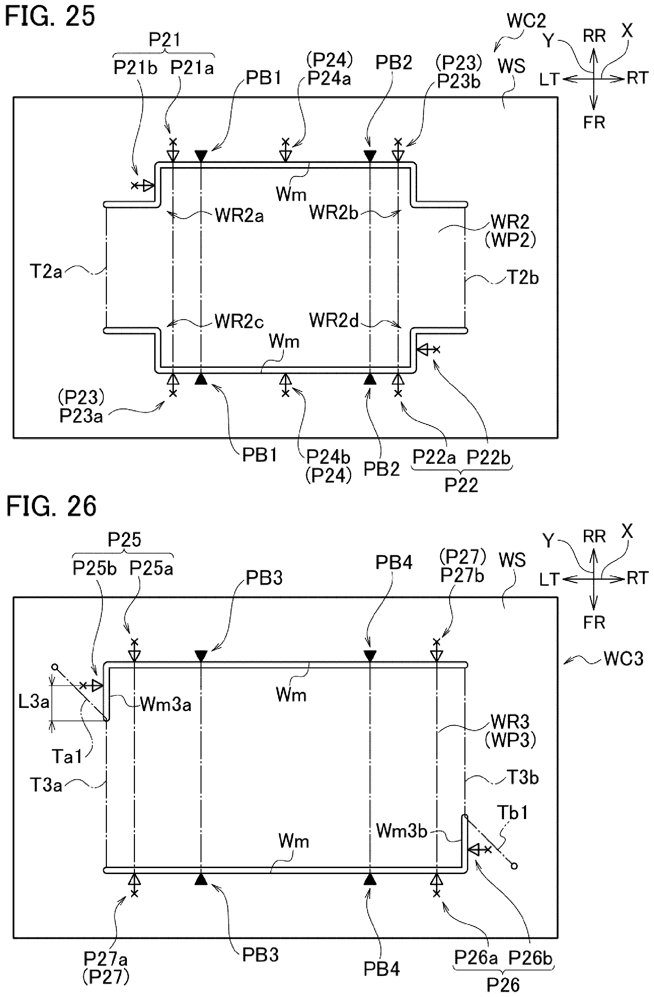

In FIG. 25 and subsequent drawings, the movement restricting protrusion portion Wf illustrated in the part (a) of FIG. 24D is expressed by a reference sign P21 in the part (b) of FIG. 24 for easy depiction and easy understanding.

When the operator causes the sheet metal processing system ST to execute the layout in the mode B, the operator sets the tool used for half-shear processing that forms the movement restricting protrusion portion Wf on the lower turret 121 and the upper turret 122 of the punching unit 12, and instructs the general layout unit 7 to execute the layout in the mode B via the input unit 73 in advance.

The mode B may be so set that the general layout unit 7 automatically determines whether or not the tool to be used for half-shear processing that forms the movement restricting protrusion portion Wf is set in the punching unit 12, executes the mode A when the tool is not set, and executes the mode B when the tool is set.

In the mode B, the general layout unit 7 determines, based on the positions of the contour of the product WP and its remaining contour line Tz, or the like, whether or not the layout of total two pairs of movement restricting protrusion forming portions for forming the movement restricting protrusion portion Wf is possible, the two pairs including one pair for the first oriented direction and the second oriented direction and one pair for the third oriented direction and the fourth oriented direction. If not possible, the general layout unit 7 switches to the mode A and executes only the layout of the supporting protrusion forming portions, or executes the layout of the movement restricting protrusion forming portions for forming the movement restricting protrusion portions Wf only in the oriented direction where the layout is possible.

The movement restricting protrusion portions Wf are formed on the offcut WS along the contour to restrict the horizontal movement of the cut product WP toward the formed movement restricting protrusion portions Wf. Therefore, the general layout unit 7 determines whether or not the intermediate product WR has the contour that allows formation of the movement restricting protrusion portions Wf so as to restrict the movement of the cut product WP in two axis directions that are orthogonal or oblique in the horizontal direction.

FIG. 25 illustrates a workpiece WC2 representing an example in which two pairs of movement restricting protrusion portions Wf can be formed to restrict the horizontal movement. Specifically, FIG. 25 is a plan view illustrating supporting protrusion forming portions PB1 and PB2 and movement restricting protrusion forming portions P21 to P24 laid out to an intermediate product WR2, that is, a plan view illustrating a workpiece WC2 where the intermediate product WR2 is formed by the slits Wm immediately before cutting a pre-final cut line T2b and a final cut line T2a. The intermediate product WR2 is made into a product WP2 by cutting the pre-final cut line T2b and the final cut line T2a.

The intermediate product WR2 has inward corner portions WR2a to WR2d, which are internal corners formed by orthogonal two sides at four corner parts. Specifically, the inward corner portions WR2a and WR2b are formed at the respective parts constituting a left rear corner and a right rear corner, and the inward corner portions WR2c and WR2d are formed at the respective left front corner and the right front corner. In this example, the two orthogonal sides that constitute the internal corners, namely, inward corner portions WR2a to WR2d, are two sides in the left-right direction and the up-down direction.

The general layout unit 7 lays out the supporting protrusion forming portion PB1 and PB2 to the offcut WS of the intermediate product WR2 in the same procedure as in the example 1. The general layout unit 7 also selects two diagonally located inward corner portions out of the inward corner portions WR2a to WR2d, and lays out to the offcut WS the movement restricting protrusion forming portions P21 and P22 that form the movement restricting protrusion portions Wf, corresponding to their respective two orthogonal sides.

The laid out movement restricting protrusion forming portion P21 includes a movement restricting protrusion forming portion P21a formed along the contour extending in the left-right direction to restrict the rearward movement of the product WP2, and a movement restricting protrusion forming portion P21b formed along the contour extending in the front-rear direction to restrict leftward movement of the product WP2.

The laid out movement restricting protrusion forming portion P22 includes a movement restricting protrusion forming portion P22a formed along the contour extending in the left-right direction to restrict the forward movement of the product WP2, and a movement restricting protrusion forming portion P22b formed along the contour extending in the front-rear direction to restrict rightward movement of the product WP2.

The supporting protrusion portions We, formed in the supporting protrusion forming portions PB1 and PB2 laid out as described above, lift up the product WP2 by the plate thickness. The movement restricting protrusion portions Wf in the movement restricting protrusion forming portions P21a and P21b restrict the rearward and leftward movements of the lifted product WP2, respectively, and the movement restricting protrusion portions Wf in the movement restricting protrusion forming portions P22a and P22b restrict the forward and rightward movements of the lifted product WP2, respectively. The movement restricting protrusion portions Wf, formed in the movement restricting protrusion forming portions P21b and P22b to restrict the leftward and rightward movements of the product WP are distinguished as movement restricting protrusion portions Wf1 as necessary. The movement restricting protrusion portions Wf formed in the movement restricting protrusion forming portions P21a and P22b to restrict the rearward and forward movements of the product WP are distinguished as movement restricting protrusion portions Wf2 as necessary.

Therefore, since the movement restricting protrusion forming portions P21 and P22 are laid out, the product WP2, cut out and lifted up by the plate thickness in the supporting protrusion forming portions PB1 and PB2, does not move to the offcut WS in the horizontal direction. Therefore, the product WP2, having the movement restricting protrusion forming portions P21 and P22 laid out in the mode B, can be transferred together with the offcut WS to a sorting device located at a different place from the combination processing machine 1 and be sorted and conveyed to a prescribed location by a conveyor attached to the sorting device. As a result, processing such as laser processing of the product WP2 can be performed by the combination processing machine 1 even during conveyance of the product WP2, which increases the operation rate of the sheet metal processing system ST.

In the case where, for example, the shape of the intermediate product WR2 is relatively long in the left-right direction, the amount of rotational movement of the product WP2 around the vertical axis may not be negligible with only the movement restricting protrusion forming portions P21 and P22 laid out at two diagonal positions in the left rear part and the right front part. In this case, movement restricting protrusion forming portions P23b and P23a may be laid out to restrict the rearward and forward movement. For example, the movement restricting protrusion forming portions P23a is laid out in a front position opposed to the movement restricting protrusion forming portions P21a, and the movement restricting protrusion forming portions P23b is laid out at a rear position opposed to the movement restricting protrusion forming portions P22a.

This makes it possible to reduce the rotational movement of the product WP2 and more reliably execute the conveying operation of the product WP2.

On the other hand, when the mass of the product WP2 is large (heavy) because of a large shape or a large plate thickness, and an unexpected external force prompts horizontal movement of the product WP2, the movement restricting protrusion portions Wf in the direction of movement may receive excessive force and deform, which may hinder the restriction of the movement. Accordingly, when the mass of the product WP is large beyond a prescribed value, the general layout unit 7 may lay out a movement restricting protrusion forming portion P24 at some contour part to which the movement restricting protrusion forming portion P24 can be added as illustrated in FIG. 25. With this layout, the force applied to the movement restricting protrusion portions Wf by the horizontal movement of the product WP is distributed and deformation of the movement restricting protrusion portions Wf is prevented. In the example illustrated in FIG. 25, the general layout unit 7 lays out a movement restricting protrusion forming portion P24a at the rear contour part extending long in the left-right direction, and a movement restricting protrusion forming portion P24b at the front contour part.

This makes it possible to restrict the horizontal movement more reliably without defect, even when the mass of the large product WP2 is large.

FIG. 26 illustrates a workpiece WC3 in an example of forming the movement restricting protrusion portions Wf by applying the mode B to an intermediate product WR3, which is made into a product WP3 having a couture without the inward corner portions WR2a to WR2d as illustrated in FIG. 25. Specifically, FIG. 26 is a plan view illustrating supporting protrusion forming portions PB3 and PB4 and movement restricting protrusion forming portions P25 to P27 laid out to the intermediate product WR3.

The intermediate product WR3 has a rectangular shape having a long side in the X direction in plan view, with the same couture as the intermediate product WR illustrated in FIG. 4A. However, in the workpiece WC3, in order to form the movement restricting protrusion portions Wf in the mode B, a pre-final cut line T3b and a final cut line T3a are set to have slits continuously connected to the slits Wm extending in the left-right direction, the slits being formed in a part of the pre-final cut line Tb and a part of the final cut line Ta, respectively. Specifically, an extension slit Wm3a continuously connected to the left end of the rear slit Wm and extending forward, and an extension slit Wm3b continuously connected to the right end of the front slit Wm and extending rearward are formed. As a result, a guide cut line Tb1, which is a path to guide the laser beam to cut the pre-final cut line T3b, and a guide cut line Ta1, which is a path to guide the laser beam to cut the final cut line T3a, are set to be diagonally connected with the pre-final cut line T3b and the final cut line T3a.

The general layout unit 7 lays out the supporting protrusion forming portions PB3 and PB4 to the offcut WS of the intermediate product WR3 in the same procedure as in the example 1.

Forming the extension slits Wm3a and Wm3b provides the intermediate product WR3 with a contour part extending in the left-right direction and a contour part extending in the front-rear direction at the left rear corner portion and the right front corner portion. Accordingly, the general layout unit 7 lays out a movement restricting protrusion forming portion P25 at the left rear corner portion, and a movement restricting protrusion forming portion P26 at a right front corner portion.

The laid out movement restricting protrusion forming portion P25 includes a movement restricting protrusion forming portion P25a formed in the left rear corner portion to restrict the rearward movement of the product WP3, and a movement restricting protrusion forming portion P25b formed along the contour part extending in the front-rear direction generated by the extension slit Wm3a to restrict leftward movement of the product WP3.

The laid out movement restricting protrusion forming portion P26 includes a movement restricting protrusion forming portion P26a formed in the right front corner portion to restrict the forward movement of the product WP3, and a movement restricting protrusion forming portion P26b formed along the contour part extending in the front-rear direction generated by the extension slit Wm3b to restrict the rightward movement of the product WP3.

The supporting protrusion portions We, formed in the supporting protrusion forming portions PB3 and PB4 laid out as described above, lifts up the product WP3 by the plate thickness. The movement restricting protrusion portions Wf in the movement restricting protrusion forming portions P25a and P25b restrict the rearward and leftward movements, respectively. The movement restricting protrusion portions Wf in the movement restricting protrusion forming portions P26a and P26b further restrict the forward and rightward movements, respectively.

Therefore, since the extension slits Wm3a and Wm3b are formed and the movement restricting protrusion forming portions P25 and P26 are laid out, the product WP3, cut out and lifted by the plate thickness in the supporting protrusion forming portions PB3 and PB4, does not move to the offcut WS in the horizontal direction. Therefore, the product WP3, having the movement restricting protrusion forming portions P25 and P26 laid out in the mode B, can be transferred together with the offcut WS to a sorting device located at a different place from the combination processing machine 1 and be sorted and conveyed to a prescribed location by a conveyor attached to the sorting device. As a result, processing such as laser processing of the product WP3 can be performed by the combination processing machine 1 even during conveyance of the product WP3, which increases the operation rate of the sheet metal processing system ST.

In the case where, for example, the shape of the intermediate product WR3 is relatively long in the left-right direction, the amount of rotational movement of the product WP3 may not be negligible with only the movement restricting protrusion forming portions P25 and P26 laid out at two diagonal positions in the left rear part the right front part. In this case, movement restricting protrusion forming portions P27a and P27b may be laid out to restrict the rearward and forward movement. For example, the movement restricting protrusion forming portions P27a is laid out in a front position opposed to the movement restricting protrusion forming portions P25a, and the movement restricting protrusion forming portions P27b is laid out at a rear position opposed to the movement restricting protrusion forming portions P26a.

This makes it possible to reduce the rotational movement of the product WP3 and more reliably execute the conveying operation of the product WP3.

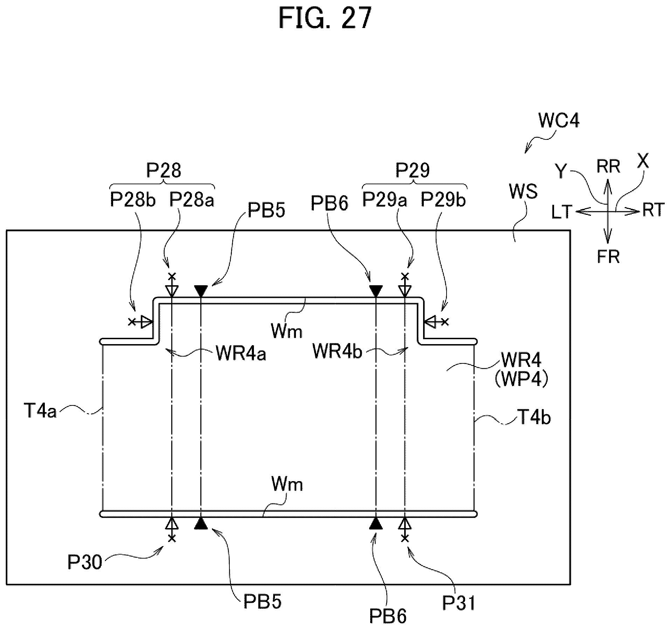

FIG. 27 illustrates a workpiece WC4 in an example of forming the movement restricting protrusion portions Wf by applying the mode B to an intermediate product WR4, which is made into a product WP4 having a contour including inward corner portions WR4a and WR4b at the corner portions on the left rear side and the right rear side. Specifically, FIG. 27 is a plan view illustrating supporting protrusion forming portions PB5 and PB6 and movement restricting protrusion forming portions P28 to P31 laid out to the intermediate product WR4.

The general layout unit 7 lays out the supporting protrusion forming portions PB5 and PB6 to the offcut WS of the intermediate product WR4 in the same procedure as in the example 1. In the inward corner portions WR4a and WR4b, the general layout unit 7 lays out to the offcut WS the movement restricting protrusion forming portions P28 and P29 for forming the movement restricting protrusion portions Wf, corresponding to their respective two orthogonal sides.

The laid out movement restricting protrusion forming portion P28 includes a movement restricting protrusion forming portion P28a formed in an edge portion of the offcut WS facing the rear slit Wm extending in the left-right direction to restrict the rearward movement of the product WP, and a movement restricting protrusion forming portion P28b formed at an edge portion of the offcut WS facing the slit extending in the front-rear direction at the inward corner portion WR4a to restrict the leftward movement of the product WP.

The laid out movement restricting protrusion forming portion P29 includes a movement restricting protrusion forming portion P29a formed in an edge portion of the offcut WS facing the rear slit Wm extending in the left-right direction to restrict the rearward movement of the product WP, and a movement restricting protrusion forming portion P29b formed in an edge portion of the offcut WS facing the slit extending in the front-rear direction at the inward corner portion WR4b to restrict the rightward movement of the product WP.

In order to restrict the forward movement of the product WP4, the general layout unit 7 lays out, in addition to the movement restricting protrusion forming portions P28 and P29, movement restricting protrusion forming portions P30 and P31 in edge portions of the offcut WS facing the front slit Wm corresponding to the movement restricting protrusion forming portions P28a and P29a, respectively.

The supporting protrusion portions We, formed in the supporting protrusion forming portions PB5 and PB6 laid out as described above, lifts up the product WP4 by the plate thickness, the movement restricting protrusion portions Wf in the movement restricting protrusion forming portions P28a and P29a restrict the rearward movement, and the movement restricting protrusion portions Wf in the movement restricting protrusion forming portions P28b and P29b restricts the leftward and rightward movements, respectively. The movement restricting protrusion portions Wf in the movement restricting protrusion forming portions P30 and P31 further restrict the forward movement.

Therefore, since the movement restricting protrusion forming portions P28 to P31 are laid out in the workpiece Wc4, the product WP4, cut out and lifted by the plate thickness in the supporting protrusion forming portions PB5 and PB6, does not move to the offcut WS in the horizontal direction. Therefore, the product WP4, having the movement restricting protrusion forming portions P28 and P31 laid out in the mode B, can be transferred together with the offcut WS to a sorting device located at a different place from the combination processing machine 1 and be sorted and conveyed to a prescribed location by a conveyor attached to the sorting device. As a result, processing such as laser processing of the product WP4 can be performed by the combination processing machine 1 even during conveyance of the product WP4, which increases the operation rate of the sheet metal processing system ST.

(Example 3)

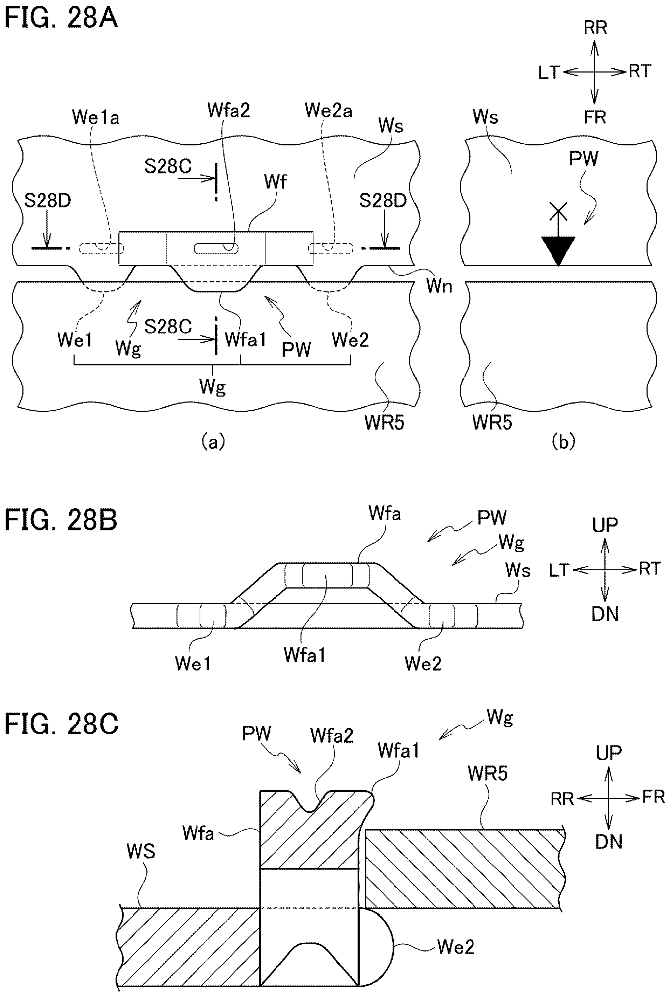

Example 3 relates to a sheet metal processing method in a mode C for laying out a composite protrusion forming portion PW for forming a composite protrusion portion Wg, including both the supporting protrusion portion We and the movement restricting protrusion portion Wf, to the example 1 in the mode A by using the same sheet metal processing system ST as in the example 1. The composite protrusion portion Wg is formed by one shaping operation using a set of tools constituted of a die and a punch. The composite protrusion portion Wg formed in the composite protrusion forming portion PW is formed by the technology described in Patent Literature 2, and the shape of the composite protrusion forming portion PW is illustrated in FIGS. 28A to 28C.

FIG. 28A includes a part (a) that is a plan view to illustrate the composite protrusion forming portion PW. FIG. 28A includes a part (b) that is a diagram to illustrate a reference sign of the composite protrusion forming portion PW. FIG. 28B is a front view of the composite protrusion forming portion PW. FIG. 28C is a sectional view at a S28C-S28C position in FIG. 28A.

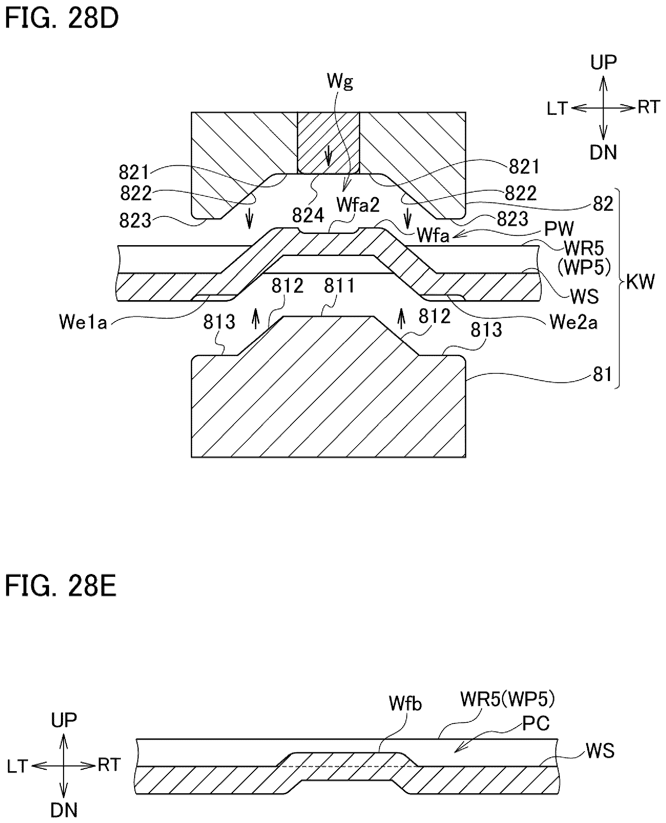

FIG. 28D illustrates the outline of a composite protrusion portion forming tool KW that forms the composite protrusion portion Wg. FIG. 28D is a sectional view to illustrate the composite protrusion portion forming tool KW that forms the composite protrusion forming portion PW. For the convenience of explanation, up, down, left, and right directions are each specified by the direction of arrows illustrated in each drawing.

As illustrated in FIGS. 28A to 28C, the composite protrusion portion Wg includes a movement restricting protrusion portion Wfa protruding upward beyond a plate thickness in a bridge-like form along an edge portion facing a slit Wm of the offcut WS, and supporting protrusion portions We1 and We2 formed by coining so as to protrude forward in the vicinity of left and right roots of the movement restricting protrusion portion Wfa. In an upper end portion of the movement restricting protrusion portion Wfa, a protruding portion Wfa1 is formed by coining so as to protrude forward.

As illustrated in FIG. 28D, the composite protrusion portion forming tool KW that forms the movement restricting protrusion portion Wfa is a set of a bridge forming punch 82 fitted to the upper turret 122 of the punching unit 12 and a bridge forming die 81 fitted to the lower turret 121. The composite protrusion portion forming tool KW may be simply referred to as the tool KW below.

The bridge forming punch 82 includes, as a recess portion recessed upward from skirt portion 823 that is the lowest flat surface, a recess top portion 821 and inclined portions 822 formed on the left and right sides of the recess top portion 821. The inclined portions 822 are parts corresponding to a pair of inclined legs on the outer (upper) surface of the movement restricting protrusion portion Wfa to be formed, and the recess top portion 821 is a part corresponding to the bottom of the deepest recess portion. At the center of the recess top portion 821 in the left-right direction, a coining pin 824 is provided which protrudes downward at the last stage of a descending stroke during shaping and presses the upper surface of the movement restricting protrusion portion Wfa to perform coining.

The bridge forming die 81 includes a top portion 811 that is a highest flat surface of a protrusion, inclined portions 812 formed on the left and right sides of the top portion 811, and coining shoulder portions 813 that are horizontal faces located on the outside of the left and right sides of the inclined portions 812. The top portion 811 and the inclined portions 812 are formed into the shape corresponding to the inner surface shape of the movement restricting protrusion portion Wfa to be formed.

When the bridge forming punch 82 descends from the upper side toward the offcut WS, the composite protrusion portion forming tool KW executes the operation of holding the offcut WS with the bridge forming die 81 arranged on the lower side of the offcut WS and lifting the offcut WS. This results in the formation of a bridge-shaped movement restricting protrusion portion Wfa. The two coining shoulder portions 813 are formed so as to be located above the lower surface of the offcut WS at the final stage of the descending operation of the bridge forming punch 82. Therefore, in the final stage of the descending operation of the bridge forming punch 82, the coining shoulder portions 813 bite into the offcut WS and form indentations We1a and We2a, and the resulting plastic flow of the metal forms the supporting protrusion portions We1 and We2 (see FIG. 28A). At the final stage of the descending operation of the bridge forming punch 82, the coining pin 824 is made to protrude below the recess top portion 821, and this causes the coining pin 824 to form an indentation Wfa2 on the upper surface of the movement restricting protrusion portion Wfa, and a resulting plastic flow of the metal forms the protruding portion Wfa1 (see FIG. 28A).

Thus, the composite protrusion portion forming tool KW forms the composite protrusion portion Wg including both the movement restricting protrusion portion Wfa and the supporting protrusion portions We1 and We2 in the offcut WS by a full-stroke descending operation of the bridge forming punch 82 to the lowest position in cooperation with the bridge forming die 81. In the drawings referenced in the following description, the composite protrusion forming portion PW is designated by a reference sign PW illustrated in the part (b) of FIG. 28A.

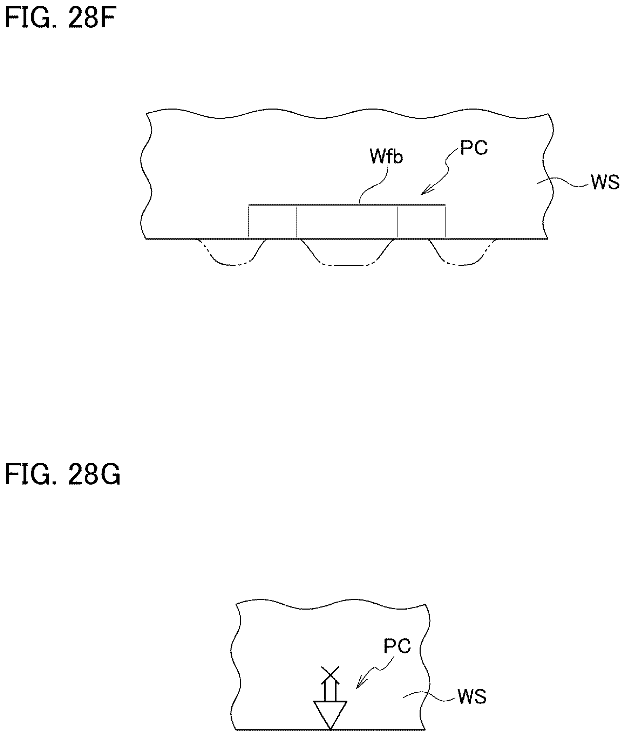

As described above, the composite protrusion portion forming tool KW forms the supporting protrusion portions We1 and We2 at the final stage of the descending operation. Accordingly, only the movement restricting protrusion portion Wfb can be formed as illustrated in FIGS. 28E to 28F by shortening the descending stroke to stop descending motion in the middle without allowing the bridge forming punch 82 to descend to the lowest position. In FIG. 28F, the outline corresponding to the supporting protrusion portions We1 and We2 and the protruding portion Wfa1 formed in the case of the full stroke is also illustrated by a two-dot chain line for easy understanding. In this case, the height of the movement restricting protrusion portion Wfb to be formed is lower than that of the movement restricting protrusion portion Wfa formed by full stroke, though it is enough to restrict the horizontal movement of the product WP5 lifted up by the plate thickness.

In this way, using the composite protrusion portion forming tool KW, the general layout unit 7 lays out the protrusion forming portion including the movement restricting protrusion portion Wfb with a small protrusion amount by shortening the descending stroke, as the movement restricting protrusion forming portion PC.

As the reference sign designating the movement restricting protrusion portion Wfb, the reference sign PC illustrated in FIG. 28G is used to distinguish it from the movement restricting protrusion portion Wfa.

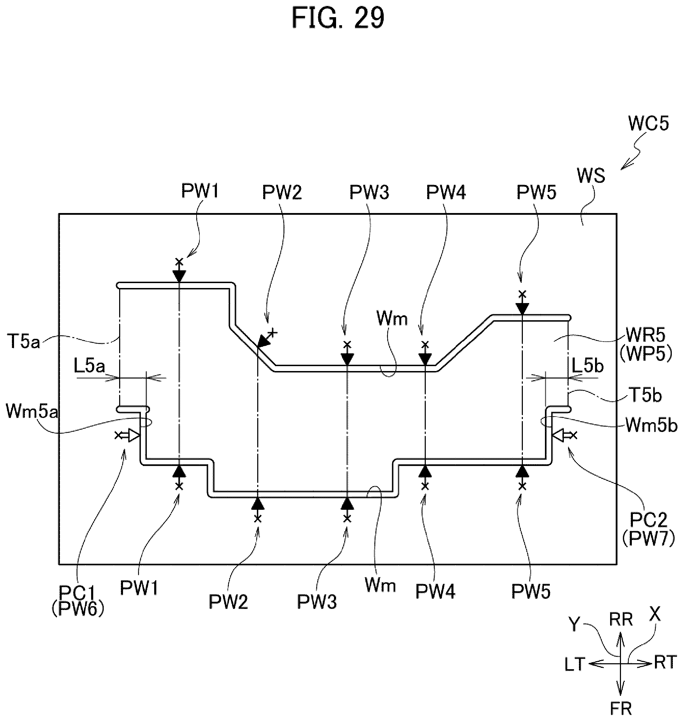

The layout example in the mode C using the composite protrusion portion forming tool KW described above is described using a workpiece WC5 illustrated in FIG. 29. When the operator causes the sheet metal processing system ST to execute the layout in the mode C, the operator sets the bridge forming die 81 and the bridge forming punch 82 in the lower turret 121 and the upper turret 122 of the punching unit 12, respectively, and instructs the general layout unit 7 to execute the layout in the mode C via the input unit 73 in advance.

The mode C may be so set that the general layout unit 7 automatically determines whether or not the composite protrusion portion forming tool KW that forms the composite protrusion portion Wg is set in the punching unit 12, executes the mode A or the mode B when the composite protrusion portion forming tool KW is not set, and executes the mode C when the composite protrusion portion forming tool KW is set.

In the workpiece WC5 illustrated in FIG. 29, the intermediate product WR5 has an elongate shape having a long side in the left-right direction. In the intermediate product WR5, front-rear slits Wm5a and Wm5b extending in the front-rear direction and having a length that allows layout are formed at a position distanced from a final cut line T5a serving as a left end portion by a prescribed distance L5a to the right and at a position distanced from a pre-final cut line T5b serving as a right end portion by a prescribed distance L5b to the left, respectively.

As illustrated in FIG. 29, in the mode C, the general layout unit 7 lays out composite protrusion forming portions PW1 to PW5 as the composite protrusion forming portions PW to WS that is the offcut of the workpiece WC5 in the same procedure as in the example 1 that is in the mode A.

When the distance L5a and the distance L5b are less than a pre-set threshold, the general layout unit 7 lays out the movement restricting protrusion forming portions PC1 and PC2 instead of the composite protrusion forming portions at the edge portions of the offcut WS facing the front-rear slits Wm5a and Wm5b. When the distance L5a and the distance L5b exceed a distance La that is a threshold, the general layout unit 7 lays out composite protrusion forming portions PW6 and PW7 (illustrated in parentheses in FIG. 29). FIG. 29 illustrates an example where the movement restricting protrusion forming portions PC1 and PC2 are laid out.

The concept of the method for setting the distance L5a and the distance L5b is the same as the concept of the method for setting the distance La described in the example 1. Specifically, when the composite protrusion portions Wg are formed in accordance with the front-rear slits that are distanced by the distance La that is a threshold or less from the final cut line T5a and the pre-final cut line T5b, the intermediate product WR5 is forcibly deformed and lifted since the final cut line T5a and the pre-final cut line T5b are not yet cut. As a result, there is a risk that plastic deformation may remain in the resulting product and processing defects may occur in the subsequent process. Therefore, the distance La as a threshold is set in advance in accordance with the bending rigidity based on the material and shape or the like of the workpiece WC5. As the distance La, the values in Table 2, which are illustrated and described in FIG. 6 relating to FIG. 4A in the example 1, can be applied. In Table 2, the distance La is described as the distance from the remaining contour lines Tz. However, in the mode C, the distance La is read as the distance from the final cut line T5a and the pre-final cut line T5b.

While the distance La is described as the distance of the intermediate product WR in the left-right direction in the example 1 and in above description, the distance La can be set, for example, as the distance in the front-rear direction depending on the shape of the intermediate product since the distance La is a numerical value relating to the bending rigidity. Specifically, the mode C may be applied to the workpiece WC3 described in the example 2 (mode B) and illustrated in fig. 26. As illustrated in FIG. 26, the distance in the front-rear direction from the final cut line T3a to the layout position corresponding to the extension slit Wm3a is defined as a distance L3a. When it is not possible to set the layout position so that the distance L3a exceeds the distance La as a threshold, i.e., the layout position can be set only with the distance L3a being equal to or less than the distance La, the movement restricting protrusion portion Wfb may be formed, and when the layout can be set with the distance L3a exceeding the distance La, the composite protrusion portion Wg may be formed.

Specifically, in FIG. 29, when the distances L5a and L5b of the layout positions from the end portion of the final cut line T5a and the end portion of the pre-final cut line T5b in the left-right direction are equal to or less than the distance La as a threshold, the movement restricting protrusion forming portions PC1 and PC2 are laid out instead of the composite protrusion forming portions PW6 and PW7, respectively. When the distances L5a and L5b exceed the distance La, the composite protrusion forming portions PW1 and PW2 are laid out, respectively. It goes without saying that when the distances L5a and L5b exceed the distance La, the movement restricting protrusion forming portions PC1 and PC2 may be laid out.

In the application of the mode C to the workpiece WC3 illustrated in FIG. 26, when the distance L3a of the layout position from, for example, the end portion of the final cut line T3a is equal to or less than the distance La as a threshold, the movement restricting protrusion forming portion PC is laid out instead of the composite protrusion forming portion PW. When the distance L3a exceeds the distance La, the composite protrusion forming portion PW is laid out. It goes without saying that when the distance L3a exceeds the distance La, the movement restricting protrusion forming portions PC may be laid out.

The supporting protrusion portions We1 and We2, formed in the composite protrusion forming portions PW1 to PW5 laid out as described above, lifts up the product WP5 by the plate thickness, and the movement restricting protrusion portion Wfa restricts the movement in the front-rear direction. The movement restricting protrusion portions Wfb in the movement restricting protrusion forming portions PC1 and PC2 restrict the leftward and rightward movements of the product WP5, respectively. When the composite protrusion forming portions PW6 and PW7 are laid out instead of the movement restricting protrusion forming portions PC1 and PC2, the composite protrusion portions Wg of the composite protrusion forming portions PW6 and PW7 use the product WP5 by the plate thickness, and restrict the leftward and rightward movements of the product WP5, respectively.

Therefore, since the composite protrusion forming portions PW1 and PW7, or the composite protrusion forming portions PW1 to PW5 and the movement restricting protrusion forming portions PC1 and PC2 are laid out, the product WP5 lifted by the plate thickness does not move to the offcut WS in the horizontal direction. Therefore, the product WP5 laid out in the mode c can be transferred together with the offcut WS to a sorting device having a conveyor, located at a different place from the combination processing machine 1 and be sorted and conveyed to a prescribed location by a conveyor attached to the sorting device. As a result, processing such as laser processing of the product WP5 can be performed by the combination processing machine 1 even during conveyance of the product WP5, which increases the operation rate of the sheet metal processing system ST.

Incidentally, in the processing method for obtaining the intermediate product WR3 from the rectangular workpiece WC3 having a long side in the X direction as described with reference to FIG. 26, the final cut line T3a is cut so as to be connected to the pre-formed extension slit Wm3a. In this case, a small step in the X direction may be generated at a boundary position between the extension slit Wm3a to be a part of the short side of the product WP3 and a part cut along the final cut line T3a to be a remaining part of the short side. Depending on the degree, the step may affect the quality and external dimensions of the product WP3 and may cause failure. The step may also be generated at a boundary position between the extension slit Wm3b on the other short side of the product WP3 and the part cut along the pre-final cut line T3b.

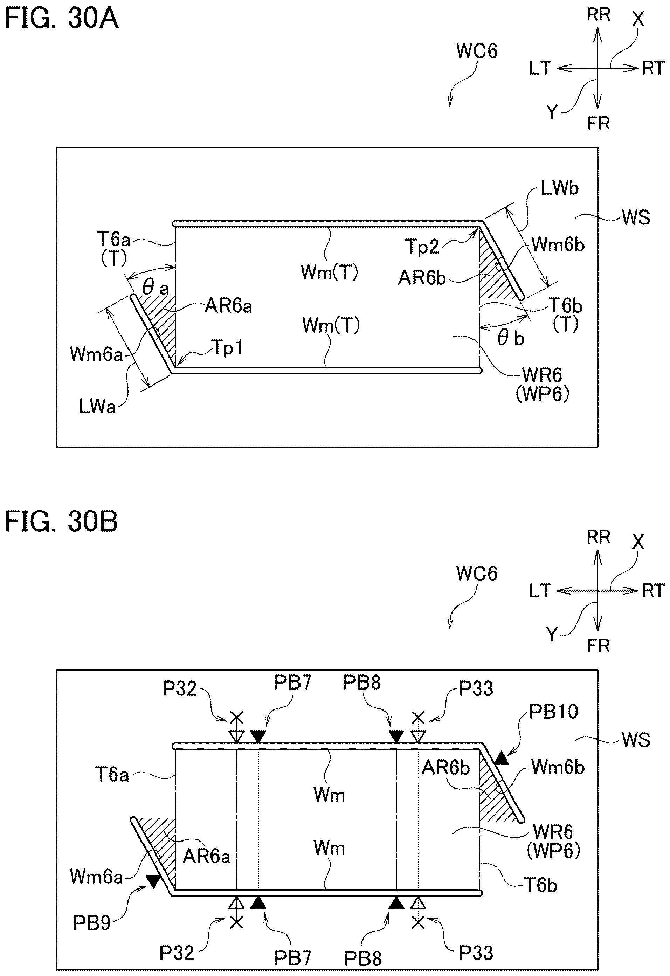

Therefore, a processing method that does not cause generation of the step is described with reference to FIGS. 30A to 30D, 31, and 32. FIG. 30A illustrates an intermediate product WR6 to be a product WP6 with a rectangular contour line T, obtained by forming by laser processing a pair of slits Wm and extension slits Wm6a and Wm6b. The slits Wm are formed in pair extending along the contour line T in the left-right direction and being separated in the front-rear direction from each other in parallel. The extension slit Wm6a is formed so as to extend linearly and diagonally to the left rear side from a vertex TP1 of the front slit Wm that constitutes a left end of the contour line T as a start point. The extension slit Wm6b is formed so as to extend linearly and diagonally to the right front side from a vertex TP2 of the rear slit Wm that constitutes a right end of the contour line T as a start point. The laser processing to form these slits and the layout processing described below are executed under the control of the general layout unit 7.

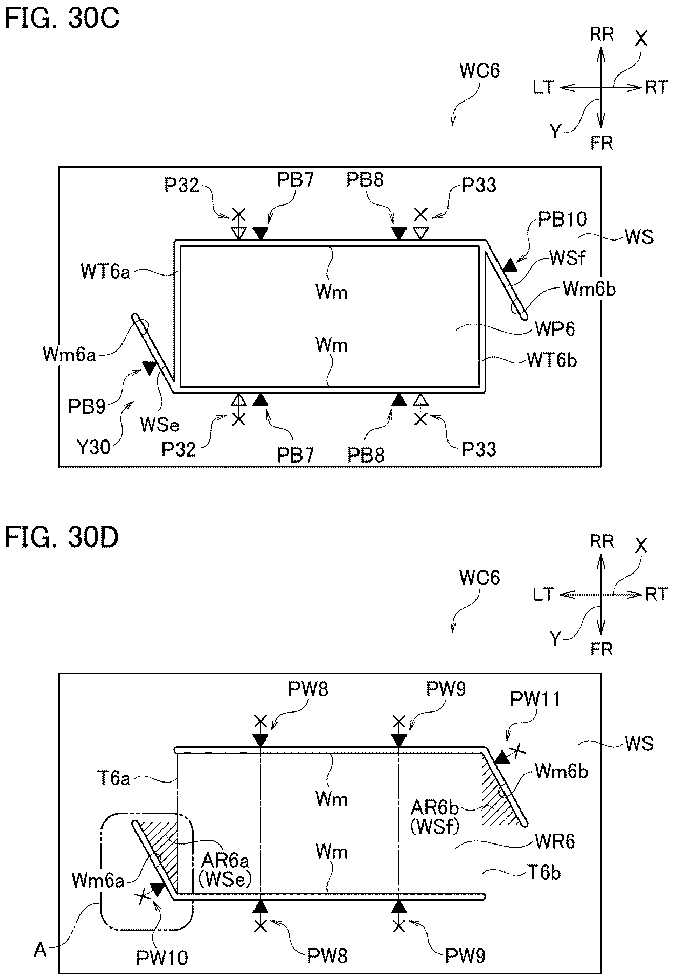

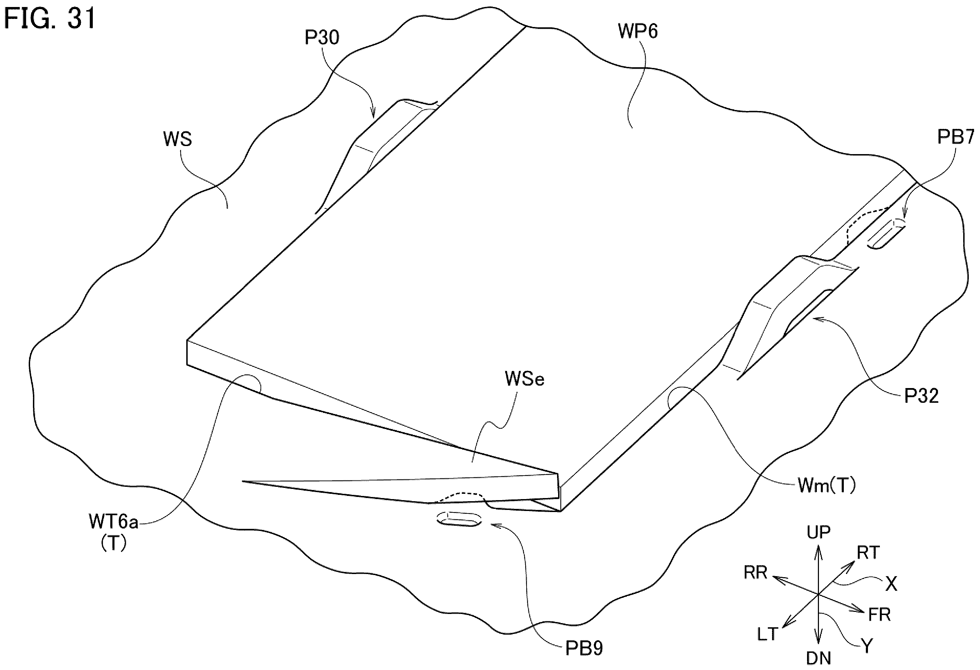

A length LWa of the extension slit Wm6a and an angle θa formed between the extension slit Wm6a and the final cut line T6a are not limited. A roughly triangular movement restricting area AR6a in the offcut WS, which is enclosed by the extension slit Wm6a and the final cut line T6a that is also the contour line T and which is hatched, is the part to be a movement restricting portion WSe lifted by a supporting protrusion forming portion PB9 as described later with reference to FIGS. 30C and 31. Therefore, the length LWa and the angle θa may be set so that the movement restricting area AR6a is sufficiently lifted up by the supporting protrusion forming portion PB9 depending on the material of the workpiece WC6, the layout of the product WP6, and the like. For example, the angle θa can be set to 30° to 60°, and the length LWa can be set to half of the final cut line T6a or more.

A length LWb of the extension slit Wm6b and an angle θb formed between the extension slit Wm6b and the pre-final cut line T6b are not limited, and they may be set independently from those of the extension slit Wm6a. A roughly triangular movement restricting area AR6b in the offcut WS, which is enclosed by the extension slit Wm6b and the pre-final cut line T6b that is also the contour line T and which is hatched, is the part to be a movement restricting portion WSf lifted by a supporting protrusion forming portion PB10 as described later with reference to FIGS. 30C and 31. Therefore, the length LWb and the angle θb may be set so that the movement restricting area AR6b is sufficiently lifted up by the supporting protrusion forming portion PB10 depending on the material of the workpiece WC6, the layout of the product WP6, and the like. For example, the angle θb can be set to 30° to 60°, and the length LWb can be set to half of the pre-final cut line T6b or more.

After the intermediate product WR6 is formed as illustrated in FIG. 30A, supporting protrusion forming portions PB7 and PB8 and movement restricting protrusion forming portions P32 and P 33 are laid out and formed to the intermediate product WR6 as illustrated in FIG. 30B. The supporting protrusion forming portions PB7 are formed in pair at the same positions in the left-right direction in the front edge and the rear edge of the intermediate product WR6. Similarly, the supporting protrusion forming portions PB8 are separated to the right from the supporting protrusion forming portions PB7, and formed in pair at the same positions in the left-right direction in the front edge and the rear edge of the intermediate product WR6. The movement restricting protrusion forming portions P32 are formed in pair at the same positions in the left-right direction in the front edge and the rear edge of the intermediate product WR6, in proximity to the supporting protrusion forming portions PB7. Similarly, the movement restricting protrusion forming portions P33 are formed in pair at the same positions in the left-right direction in the front edge and the rear edge of the intermediate product WR6, in proximity to the supporting protrusion forming portions PB8.

Also for the extension slit Wm6a, a supporting protrusion forming portion PB9 is formed to lift up the movement restricting area AR6a. And for the extension slit Wm6b, a supporting protrusion forming portion PB10 is formed to lift up the movement restricting area AR6b. Since the supporting protrusion forming portions PB7 to PB10 are formed, at least in these positions, the intermediate product WR6 is lifted up roughly by the plate thickness from the offcut WS.

Then, the pre-final cut line T6b and the final cut line T6a are cut with a laser beam in this order to obtain the product WP6 cut out from the workpiece WC6 along the contour line T as illustrated in FIG. 30C. The product WP6 is in the state of being lifted up roughly by the plate thickness by the supporting protrusion forming portions PB7 and PB8. The forward movement of the product WP6 is restricted by the movement restricting protrusion forming portions P32 and P 33 formed in accordance with the front edge, and the rearward movement is restricted by the movement restricting protrusion forming portions P32 and P33 formed in accordance with the rear edge.

As for the extension slit Wm6a, as illustrated in FIG. 31, the part corresponding to the movement restricting area AR6a becomes the movement restricting portion WSe when the final cut line T6a is cut, and the movement restricting portion WSe is lifted by the supporting protrusion forming portion PB9 and is at the position facing the left end face of the product WP6. Therefore, the leftward movement of the product WP6 is restricted by the movement restricting portion WSe. As for the extension slit Wm6b, which is not illustrated in FIG. 31, the part corresponding to the movement restricting area AR6b similarly becomes the movement restricting portion WSf when the pre-final cut line T6b is cut, and the movement restricting portion WSf is lifted by the supporting protrusion forming portion PB10 and is at the position facing the right end face of the product WP6. Therefore, the rightward movement of the product WP6 is restricted by the movement restricting portion WSf.

As mentioned above, since the movement of the product WP6 in the front, rear, left, and right directions is restricted, the product WP6 does not move in the horizontal direction. Therefore, the product WP6 can be transferred together with the offcut WS to a sorting device having a conveyor, located at a different place from the combination processing machine 1 and be sorted and conveyed to a prescribed location by a conveyor attached to the sorting device. As a result, processing such as laser processing of the product WP6 can be performed by the combination processing machine 1 even during conveyance of the product WP6, which increases the operation rate of the sheet metal processing system ST.

In this processing method, when the product WP6 is cut out, other extension slits Wm6a and Wm6b, which do not constitute the contour line T of the product WP6, are formed. Therefore, since the pre-final cut line T6b and the final cut line T6a can each be cut by one continuous cutting session with a laser beam, no step is formed on the left and right end faces, which constitute the short sides of the product WP6, resulting in no defects caused by the presence of the step.

The horizontal movement of the product WP6 may be restricted by the composite protrusion forming portions PW instead of the supporting protrusion forming portions PB7 to PB10 and the movement restricting protrusion forming portions P32 and P33 illustrated in FIG. 30B. FIG. 30D illustrates an example where composite protrusion forming portions PW8 and PW9 are each formed in pair in the front-rear direction on the intermediate product WR6, with a composite protrusion forming portion PW10 formed for the extension slit Wm6a and a composite protrusion forming portion PW11 formed for the extension slit Wm6b.

In this case, the product WP6 is also cut out by cutting the pre-final cut line T6b and the final cut line T6a illustrated in FIG. 30D with a laser beam. The forward movement of the product WP6 is restricted by the composite protrusion forming portions PW8 and PW9 at the front edge, and the rearward movement is restricted by the composite protrusion forming portions PW8 and PW9 at the rear edge.

The composite protrusion forming portion PW10 lifts up the movement restricting portion WSe as the part corresponding to the movement restricting area AR6a, and the lifted-up movement restricting portion WSe restricts the leftward movement of the product WP6. The composite protrusion forming portion PW11 lifts up the movement restricting portion WSf as the part corresponding to the movement restricting area AR6b, and the lifted-up movement restricting portion WSf restricts the rightward movement of the product WP6.

Since the movement of the product WP6 in the front, rear, left, and right directions are restricted in this way, the product WP6 does not move in the horizontal direction. Therefore, the product WP6 can be transferred together with the offcut WS to a sorting device having a conveyor, located at a different place from the combination processing machine 1, and be sorted and conveyed to a prescribed location by a conveyor attached to the sorting device. As a result, processing such as laser processing of the product WP6 can be performed by the combination processing machine 1 even during conveyance of the product WP6, which increases the operation rate of the sheet metal processing system ST.

When the respective angles $\theta a$ and $\theta b$ of the extension slits Wm6a and Wm6b are small, the width of the movement restricting portions WSe and WSf is small, and therefore there is a risk that when the product WP6 moves to the left and the right, the product WP6 may be pressed and deformed in the left and right directions, respectively. As a solution, as illustrated in FIG. 30D, the composite protrusion forming portion PW10 and PW11 are formed, and therefore the movement restricting portions WSe and WSf can be lifted up, and also the deformation and movement to the left and to the right can be restricted, so that the horizontal movement of the product WP6 can reliably be restricted. Since the composite protrusion forming portions PW10 and PW11 are formed in this way, the occupancy area of the movement restricting portions WSe and WSf formed by the extension slits Wm6a and Wm6b can be reduced, and the layout efficiency of the product WP can be improved.

As is clear from FIG. 28D, in the composite protrusion forming portions PW10 and PW11, the formed movement restricting protrusion portion Wfa protrudes above the lifted product WP6. Therefore, for example, the layout position of the composite protrusion forming portion PW10 to be formed for the extension slit Wm6a is set with a margin so that the composite protrusion forming portion PW10 does not interfere with a tip portion 132a of a nozzle 132 of the laser processing head, which is moved for cutting of the final cut line T6a that is performed after the formation.

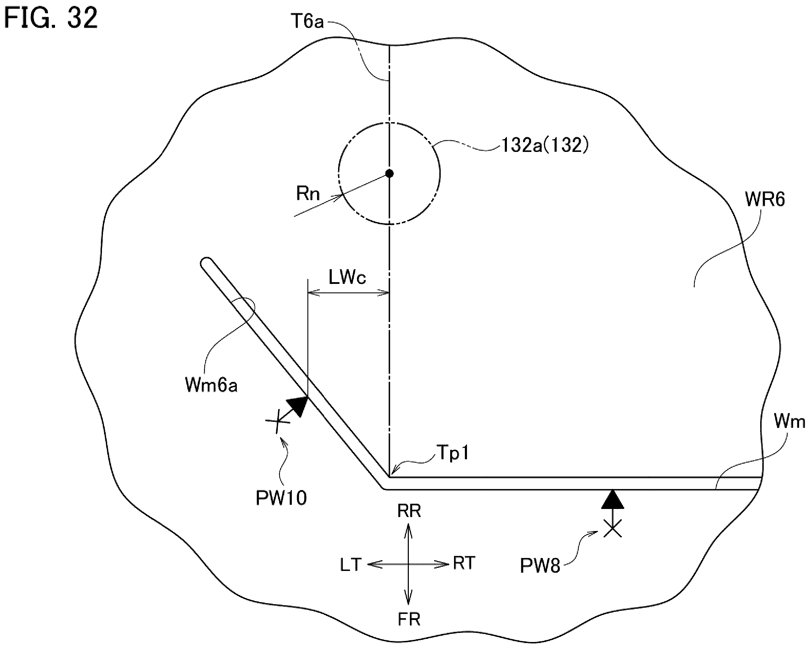

Specifically, as illustrated in FIG. 32, when the radius of the tip portion 132a of the nozzle 132 is a radius Rn, a distance LWc in the left-right direction between the final cut line T6a and the composite protrusion forming portion PW10 is set to be larger than the radius Rn with a margin.

The extension slits Wm6a and Wm6b are not limited to linear slits. The extension slits Wm6a and Wm6b may be a mixture of a linear part and a curved part, or may be formed only with a curved part.

The examples of the present invention are not limited to the configurations described above, and may be modified without departing from the gist of the present invention.

The material of the sheet metal is not limited to iron, and may be other materials such as aluminum. Although the examples where the shape of the sheet metal can be considered as rectangle have been described, the shape of the sheet metal is not limited to this. In the mode A, the first direction is set for the sheet metal in any shape, and a contour line is laid out. Then, both the end portions of the contour line in the first direction are set as the final cut lines, and the deflection amount of an intermediate product, which is a part enclosed by the contour line, is obtained by considering the intermediate product as a double end simple support beam carrying a uniformly distributed load. Then, based on the obtained deflection amount, the positions for forming the supporting protrusion portions We may be laid out as the procedure. As a result, even when the product has a complicated shape, the layout of the positions for forming the supporting protrusion portions can automatically be executed.

Which mode to select, among the modes A to C, depending on the presence or absence of a set of the half-shear processing tool and the composite protrusion portion forming tool KW for the punching unit 12, the shape (contour) of the product WP, and the presence or absence of necessity to restrict the horizontal movement of the cut out product WP, may be instructed to the general layout unit 7 by the operator each time the processing is performed, or the procedure for the selection may be stored in advance in the storage unit 72.

As described in the foregoing, a first aspect of one or more embodiments relates to a processing position layout method executed by a computer, the method including: when laying out a processing position of each of supporting protrusion portions We to be formed in an offcut WS of a sheet metal W such that a product WP cut out from the sheet metal W lies on the offcut WS, calculating a deflection amount $\delta$ of a part enclosed by a contour line T of the product WP preliminarily laid out on the sheet metal W by considering the part as a double end simple support beam carrying a uniformly distributed load and extending in a first direction; and setting a layout interval of the processing position of each of the supporting protrusion portions We based on a maximum allowable length Lga of the double end simple support beam carrying a uniformly distributed load, the maximum allowable length Lga being set such that the calculated deflection amount $\delta$ does not exceed a first prescribed value $\delta a$.

This makes it easy to lay out the processing positions of the supporting protrusion portion forming tool.

The processing position layout method according to the first one aspect may further include: when the product WP includes an extension portion TAc extending in a second direction orthogonal to the first direction, calculating a first deflection amount $\delta 2$ of the extension portion TAc by considering the extension portion TAc as a cantilever beam carrying a uniformly distributed load; and determining whether to lay out the processing position of at least one of the supporting protrusion portions We in a tip edge portion TAc1 of the extension portion TAc based on a maximum allowable length of the cantilever beam carrying a uniformly distributed load, the maximum allowable length being set such that the calculated first deflection amount $\delta 2$ of the extension portion TAc does not exceed a second prescribed value.

As a result, even when the product WP includes an extension portion extending in the Y direction, it is easy to lay out the processing position of the supporting protrusion portion forming tool.

The processing position layout method may further include: when it is determined to lay out the processing position of the at least one of the supporting protrusion portions We in the tip edge portion TAc1 of the extension portion TAc, calculating a second deflection amount of the extension portion TAc by considering the extension portion TAc as a double end simple support beam carrying a uniformly distributed load and extending in the second direction; and determining whether to lay out the processing position of at least one of the supporting protrusion portions We in lateral edge portions TAc2 and TAc3 of the extension portion TAc based on a maximum allowable length of the double end simple support beam carrying a uniformly distributed load, the maximum allowable length being set such that the calculated second deflection amount of the extension portion TAc does not exceed a third prescribed value.

As a result, even when the extension portion TAc is long, it is possible to prevent the product WP to be cut out from slipping under the offcut WS.

The processing position layout method according to the first one aspect may further include: when the product WP includes a notched portion Tad notched in a second direction orthogonal to the first direction, calculating a first deflection amount $\delta 2$ of an offcut extension portion WSd that is an extension portion of the offcut WS corresponding to the notched portion TAd by considering the offcut extension portion WSd as a cantilever beam carrying a uniformly distributed load; and determining whether to lay out the processing position of at least one of the supporting protrusion portions We in a tip part of the offcut extension portion WSd based on a maximum allowable length of the cantilever beam carrying a uniformly distributed load, the maximum allowable length being set such that the calculated first deflection amount $\delta 2$ of the offcut extension portion WSd does not exceed a second prescribed value.

As a result, even when the product WP includes a notched portion notched in the Y direction, it is easy to lay out the processing position of the supporting protrusion portion forming tool.

The processing position layout method may further include: when it is determined to lay out the processing position of the at least one of the supporting protrusion portions We in the tip part of the offcut extension portion WSd, calculating a second deflection amount of the offcut extension portion WSd by considering the offcut extension portion WSd as a double end simple support beam carrying a uniformly distributed load and extending in the second direction; and determining whether to lay out at least one of the supporting protrusion portions We in lateral edge portions TAd2 and TAd3 of the notched portion TAd based on a maximum allowable length of the double end simple support beam carrying a uniformly distributed load, the maximum allowable length being set such that the calculated second deflection amount of the offcut extension portion WSd does not exceed a third prescribed value.

As a result, even when the offcut extension portion WSd is long, it is possible to prevent the product WP to be cut out from slipping under the offcut WS.

The processing position layout method according to the first one aspect may further include: setting a tool guide area ARG to be made to correspond to a flat part of the sheet metal W in formation of the supporting protrusion portions We in accordance with a shape of a supporting protrusion portion forming tool K56A configured to form the supporting protrusion portions We; when the sheet metal W includes a protruding shaping portion WPc protruding in a thickness direction in an area enclosed by the contour line T, determining presence or absence of interference between the protruding shaping portion WPc and the tool guide area ARG at the laid out processing position; and when it is determined that the interference is present, executing correction to shift the laid out processing position to a position free from the interference between the protruding shaping portion WPc and the tool guide area ARG.

As a result, even when the product WP includes a protruding shaping portion WPc protruding in the thickness direction, it is easy to lay out the processing position of the supporting protrusion portion forming tool.

The processing position layout method according to the first one aspect may further include: setting a bounding box ARB to be made to correspond to a non-opening part of the sheet metal in accordance with a shape of a supporting protrusion portion forming tool K56A configured to form the supporting protrusion portions We; when the sheet metal W includes a hole WPd that opens in an area enclosed by the contour line T, determining presence or absence of interference between the hole WPd and the bounding box ARB at the laid out processing position; and when it is determined that the interference is present, executing correction to shift the laid out processing position to a position free from the interference between the hole WPd and the bounding box ARB.

As a result, even when the product WP includes the hole WPd that is a through-hole, it is easy to lay out the processing position of the supporting protrusion portion forming tool.

The processing position layout method according to the first one aspect may further include: setting a bounding box ARB to be made to correspond to a non-opening part of the sheet metal W in accordance with a shape of a supporting protrusion portion forming tool K56A configured to form the supporting protrusion portions We; when the sheet metal W includes a second extension portion WPe extending in the first direction in an area enclosed by the contour line, determining presence or absence of interference between the second extension portion WPe and the bounding box ARB at the laid out processing position; and when it is determined that the interference is present, executing correction to shift the laid out processing position to a position free from the interference between the second extension portion WPe and the bounding box ARB.

As a result, even when the product WP includes an X-directional extension portion WPe that is the second extension portion extending in the first direction, it is easy to lay out the processing position of the supporting protrusion portion forming tool.

The processing position layout method according to the first one aspect may further include: laying out, on respective parts of the offcut WS corresponding to both end portions of the contour line in the first direction, a processing position of a first movement restricting protrusion portion Wf1 configured to restrict movement of the product WP cut out from the sheet metal W in the first direction; and laying out, on respective parts of the offcut WS corresponding to both end portions of the contour line T in the second direction orthogonal to the first direction, a processing position of a second movement restricting protrusion portions Wf2 configured to restrict movement of the product WP cut out from the sheet metal W in the second direction.

As a result, since the cut out product WP does not move along the offcut WS, it is possible to reliably execute the conveyance of the product WP with the offcut WS.

The processing position layout method may further include, when the contour line has a rectangle shape having a long side in the first direction, laying out the processing position of the first movement restricting protrusion portion Wf1 and the processing position of the second movement restricting protrusion portion Wf2 at positions close to an identical vertex, among four vertices of the rectangle shape, in the respective both end portions of the contour line in the first direction.

This makes it possible to efficiently prevent the movement of the cut out product WP along the offcut WS.

The processing position layout method according to the first one aspect may further include: when the contour line T has a rectangle shape having a long side in the first direction, forming on the offcut WS an extension slit Wm6a extending, from a vertex of the rectangle shape as a start point, in a direction separating from the contour line T orthogonal to the first direction; and laying out the processing position of at least one of the supporting protrusion portions We on the offcut WS outside a movement restricting portion WSe that is a part between the formed extension slit Wm6a and the contour line T, such that the movement restricting portion Wse lies on the offcut W.

As a result, since the movement of the product WP in the first direction can be restricted by the movement restricting portion WSe lifted up by the supporting protrusion portion We, the short side of the product WP can be cut out by a single laser processing, and therefore no step is generated on the end face of the short side.

A second aspect of one or more embodiments relates to a sheet metal processing method, including: by a computer 7, laying out a processing position of each of supporting protrusion portions We to be formed in an offcut WS of a sheet metal W such that a product WP cut out from the sheet metal W lies on the offcut WS by calculating a deflection amount $\delta$ of a part enclosed by a contour line T preliminarily laid out on the sheet metal W by considering the part as a double end simple support beam carrying a uniformly distributed load and extending in a first direction, and setting a layout interval of the processing position of each of the supporting protrusion portions We based on a maximum allowable length Lga of the double end simple support beam carrying a uniformly distributed load, the maximum allowable length Lga being set such that the calculated deflection amount $\delta$ does not exceed a first prescribed value $\delta a$; by a processing device 1, cutting a part of the contour line T that is other than a pair of remaining contour lines Tz pre-set on both end sides in a first direction; and by the processing device 1, forming each of the supporting protrusion portions We at the laid out processing position and then cutting the pair of remaining contour lines Tz to cut the product WP out of the sheet metal W.

This makes it easy to lay out the processing positions of the supporting protrusion portion forming tool.

A third aspect of one or more embodiments relates to a processing position layout method executed by a computer, the method including: when laying out a processing position of each of supporting protrusion portions We to be formed in an offcut WS of a sheet metal W such that a product WP cut out from the sheet metal W lies on the offcut WS and laying out a processing position of each of movement restricting protrusion portions Wf to be formed in the offcut WS so as to restrict movement of the product WP lying on the supporting protrusion portions We along the offcut WS, the supporting protrusion portions We and the movement restricting protrusion portions Wf being formed using a tool KW configured to form at least one of the supporting protrusion portions We and at least one of the movement restricting protrusion portions Wf by a single processing operation at close positions, calculating a deflection amount δ of a part enclosed by a contour line T of the product WP preliminarily laid out on the sheet metal W by considering the part as a double end simple support beam carrying a uniformly distributed load and extending in a first direction; and setting a layout interval of the processing position of each of the supporting protrusion portions We and each of the movement restricting protrusion portions Wf based on a maximum allowable length Lga of the double end simple support beam carrying a uniformly distributed load, the maximum allowable length Lga being set such that the calculated deflection amount δ does not exceed a first prescribed value δa.

This makes it easy to lay out the processing positions of the composite protrusion portion forming tool KW configured to form the supporting protrusion portions We and the movement restricting protrusion portions Wf.

The processing position layout method according to the third one aspect may further include: when the tool KW is allowed to form only the movement restricting protrusion portions Wfa by shortening a descending stroke of a punch in the single processing operation, laying out, on respective parts of the offcut WS corresponding to both end portions of the contour line T in the first direction, the processing position of each of the movement restricting protrusion portions Wfa configured to restrict movement of the product WP cut out from the sheet metal W in the first direction, the movement restricting protrusion portions Wfa being formed by shortening the descending stroke of the tool KW.

As a result, since the product WP is not forced to be lifted by the end portion in the first direction, deformation of the product WP is less likely to occur, and generation of defects in post-processing can be prevented.

The processing position layout method according to the third one aspect may further include: when the contour line T has a rectangle shape having a long side in the first direction, forming on the offcut WS an extension slit Wm6a extending, from a vertex Tp1 of the rectangle shape as a start point, in a direction separating from the contour line T orthogonal to the first direction; and setting a layout interval of the processing position of each of the supporting protrusion portions We and each of the movement restricting protrusion portions Wf on the offcut WS outside a movement restricting portion WSe that is a part between the formed extension slit Wm6a and the contour line T, such that the movement restricting portion WSe lies on the offcut WS and that deformation and movement of the movement restricting portion WSe in the first direction are restricted.

As a result, since the movement of the product WP in the first direction can be restricted by the movement restricting portion WSe lifted up by the supporting protrusion portion We, and the short side of the product WP can be cut out by a single laser processing, no step is generated on the end face of the short side. Even when the width of the supporting protrusion portions We is small, the deformation and movement of the supporting protrusion portions We in the first direction can be restricted, the occupancy area of the movement restricting portion WSe formed by the extension slits Wm6a can be reduced, and the layout efficiency of the product WP can be improved.

The entire contents of Japanese Patent Application No. 2022-189495 (filing date: November 28, 2022), Japanese Patent Application No. 2023-076773 (filing date: May 8, 2023), and Japanese Patent Application No. 2023-185717 (filing date: October 30, 2023) filed with the Japan Patent Office are incorporated herein.

## Claims

1. A processing position layout method executed by a computer, the method comprising: when laying out a processing position of each of supporting protrusion portions to be formed in an offcut of a sheet metal such that a product cut out from the sheet metal lies on the offcut,

    calculating a deflection amount of a part enclosed by a contour line of the product preliminarily laid out on the sheet metal by considering the part as a double end simple support beam carrying a uniformly distributed load and extending in a first direction; and
    setting a layout interval of the processing position of each of the supporting protrusion portions based on a maximum allowable length of the double end simple support beam carrying a uniformly distributed load, the maximum allowable length being set such that the calculated deflection amount does not exceed a first prescribed value.

2. The processing position layout method according to claim 1, further comprising:

for the product including an extension portion extending in a second direction orthogonal to the first direction, calculating a first deflection amount of the extension portion by considering the extension portion as a cantilever beam carrying a uniformly distributed load; and
determining whether to lay out the processing position of at least one of the supporting protrusion portions in a tip part of the extension portion based on a maximum allowable length of the cantilever beam carrying a uniformly distributed load, the maximum allowable length being set such that the calculated first deflection amount of the extension portion does not exceed a second prescribed value.

3. The processing position layout method according to claim 2, further comprising:

upon determining to lay out the processing position of the at least one of the supporting protrusion portions in the tip part of the extension portion, calculating a second deflection amount of the extension portion by considering the extension portion as a double end simple support beam carrying a uniformly distributed load and extending in the second direction; and
determining whether to lay out at least one of the supporting protrusion portions in a lateral edge portion of the extension portion based on a maximum allowable length of the double end simple support beam carrying a uniformly distributed load, the maximum allowable length being set such that the calculated second deflection amount of the extension portion does not exceed a third prescribed value.

4. The processing position layout method according to claim 1, further comprising:

for the product including a notched portion notched in a second direction orthogonal to the first direction, calculating a first deflection amount of an offcut extension portion that is an extension portion of the offcut corresponding to the notched portion by considering the offcut extension portion as a cantilever beam carrying a uniformly distributed load; and
determining whether to lay out the processing position of at least one of the supporting protrusion portions in a tip part of the offcut extension portion based on a maximum allowable length of the cantilever beam carrying a uniformly distributed load, the maximum allowable length being set such that the calculated first deflection amount of the offcut extension portion does not exceed a second prescribed value.

5. The processing position layout method according to claim 4, further comprising:

upon determining to lay out the processing position of the at least one of the supporting protrusion portions in the tip part of the offcut extension portion, calculating a second deflection amount of the offcut extension portion by considering the offcut extension portion as a double end simple support beam carrying a uniformly distributed load and extending in the second direction; and
determining whether to lay out at least one of the supporting protrusion portions in a lateral edge portion of the notched portion based on a maximum allowable length of the double end simple support beam carrying a uniformly distributed load, the maximum allowable length being set such that the calculated second deflection amount of the offcut extension portion does not exceed a third prescribed value.

6. The processing position layout method according to any one of claims 1 to 5, further comprising:

setting a tool guide area corresponding to a flat part of the sheet metal in formation of the supporting protrusion portions in accordance with a shape of a supporting protrusion portion forming tool configured to form the supporting protrusion portions;
for the sheet metal including a protruding shaping portion protruding in a thickness direction in an area enclosed by the contour line, determining presence or absence of interference between the protruding shaping portion and the tool guide area in the laid out processing position; and
upon determining that the interference is present, executing correction to shift the laid out processing position to a position free from the interference between the protruding shaping portion and the tool guide area.

7. The processing position layout method according to any one of claims 1 to 5, further comprising:

setting a bounding box corresponding to a non-opening part of the sheet metal in accordance with a shape of a supporting protrusion portion forming tool configured to form the supporting protrusion portions;

for the sheet metal including a hole opening in an area enclosed by the contour line, determining presence or absence of interference between the hole and the bounding box at the laid out processing position; and upon determining that the interference is present, executing correction to shift the laid out processing position to a position free from the interference between the hole and the bounding box.

8. The processing position layout method according to any one of claims 1 to 5, further comprising:

setting a bounding box corresponding to a non-opening pat of the sheet metal in accordance with a shape of a supporting protrusion portion forming tool configured to form the supporting protrusion portions; for the sheet metal including a second extension portion extending in the first direction in an area enclosed by the contour line, determining presence or absence of interference between the second extension portion and the bounding box at the laid out processing position; and upon determining that the interference is present, executing correction to shift the laid out processing position to a position free from the interference between the second extension portion and the bounding box.

9. The processing position layout method according to claim 1, further comprising:

laying out, on respective parts of the offcut corresponding to both end portions of the contour line in the first direction, a processing position of a first movement restricting protrusion portion configured to restrict movement of the product cut out from the sheet metal in the first direction; and laying out, on respective parts of the offcut corresponding to both end portions of the contour line in a second direction orthogonal to the first direction, a processing position of a second movement restricting protrusion portion configured to restrict movement of the product cut out from the sheet metal in the second direction.

10. The processing position layout method according to claim 9, further comprising: for the contour line having a rectangle shape with a long side in the first direction, laying out the processing position of the first movement restricting protrusion portion and the processing position of the second movement restricting protrusion portion at positions close to an identical vertex, among four vertices of the rectangle shape, in the respective both end portions of the contour line in the first direction.

11. The processing position layout method according to claim 1, further comprising:

for the contour line having a rectangle shape with a long side in the first direction, forming on the offcut an extension slit extending, from a vertex of the rectangle shape as a start point, in a direction separating from the contour line orthogonal to the first direction; and laying out the processing position of at least one of the supporting protrusion portions on the offcut outside a movement restricting portion that is a part between the formed extension slit and the contour line, such that the movement restricting portion lies on the offcut.

12. A processing position layout method executed by a computer, the method comprising: when laying out a processing position of each of supporting protrusion portions to be formed in an offcut of a sheet metal such that a product cut out from the sheet metal lies on the offcut and laying out a processing position of each of movement restricting protrusion portions to be formed in the offcut so as to restrict movement of the product lying on the supporting protrusion portions along the offcut,

the supporting protrusion portions and the movement restricting protrusion portion being formed using a tool configured to form at least one of the supporting protrusion portions and at least one of the movement restricting protrusion portions by a single processing operation at close positions, calculating a deflection amount of a part enclosed by a contour line of the product preliminarily laid out on the sheet metal by considering the part as a double end simple support beam carrying a uniformly distributed load and extending in a first direction; and setting a layout interval of the processing position of each of the supporting protrusion portions and each of the movement restricting protrusion portions based on a maximum allowable length of the double end simple support beam carrying a uniformly distributed load, the maximum allowable length being set such that the calculated deflection amount does not exceed a first prescribed value.

13. The processing position layout method according to claim 12, further comprising: when the tool is allowed to form only the movement restricting protrusion portions by shortening a descending stroke of a punch in the single processing operation, laying out, on respective parts of the offcut corresponding to both end portions of the contour line in the first direction, the processing position of each of the movement restricting protrusion portions configured to restrict movement of the product cut out from the sheet metal in the first direction, the movement restricting protrusion portions being formed by shortening the descending stroke.

14. The processing position layout method according to claim 12, further comprising:

for the contour line having a rectangle shape with a long side in the first direction, forming on the offcut an extension slit extending, from a vertex of the rectangle shape as a start point, in a direction separating from the contour line orthogonal to the first direction; and
setting a layout interval of the processing position of each of the supporting protrusion portions and each of the movement restricting protrusion portions on the offcut outside a movement restricting portion that is a part between the formed extension slit and the contour line, such that the movement restricting portion lies on the offcut and that deformation and movement of the movement restricting portion in the first direction are restricted.

15. A sheet metal processing method comprising:

by a computer, laying out a processing position of each of supporting protrusion portions to be formed in an offcut of a sheet metal such that a product cut out from the sheet metal lies on the offcut by

calculating a deflection amount of a part enclosed by a contour line preliminarily laid out on the sheet metal by considering the part as a double end simple support beam carrying a uniformly distributed load and extending in a first direction, and
setting a layout interval of the processing position of each of the supporting protrusion portions based on a maximum allowable length of the double end simple support beam carrying a uniformly distributed load, the maximum allowable length being set such that the calculated deflection amount does not exceed a first prescribed value;

by a processing device, cutting a part of the contour line that is other than a pair of remaining contour lines pre-set on both end sides in the first direction; and
by the processing device, forming each of the supporting protrusion portions at the laid out processing position and then cutting the pair of remaining contour lines to cut the product out of the sheet metal.

FIG. 1A

EP 4 628 229 A1

# FIG. 1B

FIG. 2A

FIG. 2B

FIG. 2C

...

# FIG. 2D

(a)

(b)

# FIG. 3

# FIG. 4A

# FIG. 4B

# FIG. 5

TABLE 1 MAXIMUM DEFLECTION AMOUNT $\delta$ (mm) OF INTERMEDIATE PRODUCT WR

| PLATE THICKNESS t (mm) | WIDTH Lw (mm) | LENGTH Lg (mm) | | | | | | | | | | | | | |
|---|---|---|---|---|---|---|---|---|---|---|---|---|---|---|---|
| | | 100 | 150 | 200 | 250 | 300 | 350 | 400 | 450 | 500 | 550 | 600 | 650 | 700 | 750 | 800 |
| 0.6 | | 0.002 | 0.024 | 0.11 | 0.325 | 0.765 | 1.544 | 2.808 | 4.724 | 7.485 | 11.309 | 16.439 | 23.145 | 31.718 | 42.479 | 55.769 |
| 0.8 | | 0 | 0.006 | 0.036 | 0.123 | 0.312 | 0.665 | 1.257 | 2.175 | 3.524 | 5.421 | 7.995 | 11.394 | 15.775 | 21.314 | 28.196 |
| 1.0 | 40 | 0 | 0.001 | 0.012 | 0.05 | 0.141 | 0.32 | 0.631 | 1.128 | 1.873 | 2.937 | 4.4 | 6.352 | 8.892 | 12.127 | 16.172 |
| 1.2 | | 0 | 0 | 0.004 | 0.021 | 0.067 | 0.163 | 0.339 | 0.627 | 1.07 | 1.714 | 2.612 | 3.824 | 5.416 | 7.46 | 10.034 |
| 1.6 | | 0 | 0 | 0.001 | 0.007 | 0.025 | 0.066 | 0.144 | 0.279 | 0.49 | 0.804 | 1.248 | 1.855 | 2.66 | 3.703 | 5.026 |
| 2.3 | | 0 | 0 | 0 | 0.002 | 0.007 | 0.022 | 0.052 | 0.105 | 0.191 | 0.321 | 0.509 | 0.77 | 1.119 | 1.575 | 2.159 |
| 3.2 | | 0 | 0 | 0 | 0 | 0.002 | 0.008 | 0.019 | 0.042 | 0.079 | 0.136 | 0.22 | 0.339 | 0.5 | 0.712 | 0.986 |

EP 4 628 229 A1

# FIG. 6

TABLE 2 RELATIONSHIP BETWEEN
PLATE THICKNESS t AND DISTANCE La

| PLATE THICKNESS t (mm) | DISTANCE La FROM REMAINING CONTOUR LINE Tz (mm) |
|---|---|
| 0.6 | 20 |
| 0.8 | 30 |
| 1.0 | 40 |
| 1.2 | 50 |
| 1.6 | 60 |
| 2.3 | 70 |
| 3.2 | 80 |

# FIG. 7

TABLE 3 RELATIONSHIP BETWEEN PLATE
THICKNESS t AND MAXIMUM PITCH Lb

| PLATE THICKNESS t (mm) | MAXIMUM PITCH La (mm) |
|---|---|
| 0.6 | 110 |
| 0.8 | 140 |
| 1.0 | 170 |
| 1.2 | 200 |
| 1.6 | 280 |
| 2.3 | 360 |
| 3.2 | 440 |

FIG. 8

EP 4 628 229 A1

FIG. 9

AR1    TAc    TAd   AR2     WA

TA

(WPA)

RR   X

LT ⟷ RT

Y   FR

FIG. 10A

TAc1

TAc

TAc2    TAc3

Xa

D

Lc

TA

C

RR   X

LT ⟷ RT

Y   FR

FIG. 10B

FIG. 10C

FIG. 10D

## FIG. 11

TABLE 4 MAXIMUM DEFLECTION AMOUNT $\delta$ 2(mm) OF EXTENSION PORTION TAc

| PLATE THICKNESS t (mm) | WIDTH Xa (mm) | LENGTH Lc(mm) OF EXTENSION PORTION | | | | | | | | | | | | | | |
|---|---|---|---|---|---|---|---|---|---|---|---|---|---|---|---|---|
| | | 30 | 40 | 50 | 60 | 70 | 80 | 90 | 100 | 110 | 120 | 130 | 140 | 150 | 160 | 170 |
| 0.6 | | 0.001 | 0.004 | 0.01 | 0.02 | 0.038 | 0.065 | 0.105 | 0.160 | 0.235 | 0.333 | 0.458 | 0.617 | 0.813 | 1.052 | 1.341 |
| 0.8 | | 0 | 0.002 | 0.005 | 0.011 | 0.021 | 0.037 | 0.059 | 0.090 | 0.132 | 0.187 | 0.258 | 0.347 | 0.457 | 0.5921 | 0.754 |
| 1.0 | 10 | 0 | 0.001 | 0.003 | 0.007 | 0.013 | 0.023 | 0.037 | 0.057 | 0.084 | 0.119 | 0.155 | 0.222 | 0.292 | 0.378 | 0.4832 |
| 1.2 | | 0 | 0.001 | 0.002 | 0.005 | 0.009 | 0.016 | 0.026 | 0.040 | 0.058 | 0.083 | 0.114 | 0.154 | 0.203 | 0.263 | 0.335 |
| 1.6 | | 0 | 0.001 | 0.002 | 0.005 | 0.009 | 0.066 | 0.014 | 0.022 | 0.033 | 0.046 | 0.064 | 0.086 | 0.114 | 0.148 | 0.188 |

EP 4 628 229 A1

# FIG. 12

TABLE 5 RELATIONSHIP BETWEEN PLATE THICKNESS t AND
MAXIMUM VALUE OF LENGTH Lc OF EXTENSION PORTION TAc
(NOTCHED PORTION TAd) WITHOUT NECESSITY OF SUPPORT

| PLATE THICKNESS t (mm) | MAXIMUM VALUE OF LENGTH Lc(mm) OF EXTENSION PORTION WITHOUT NECESSITY OF SUPPORT (LENGTH OF NOTCHED PORTION Ld(mm)) |
|---|---|
| 0.6 | 70 |
| 0.8 | 90 |
| 1.0 | 110 |
| 1.2 | 130 |
| 1.6 | 160 |

# FIG. 13

TABLE 6 RELATIONSHIP BETWEEN PLATE THICKNESS t
AND MAXIMUM LENGTH WITHOUT LAYOUT Lca

| PLATE THICKNESS t (mm) | MAXIMUM LENGTH WITHOUT LAYOUT Lca(mm) |
|---|---|
| 0.6 | 150 |
| 0.8 | 200 |
| 1.0 | 250 |
| 1.2 | 300 |
| 1.6 | 400 |

## FIG. 14

## FIG. 15

**FIG. 16A**

**FIG. 16B**

**FIG. 16C**

# FIG. 16D

(a)

WS

WP

Ps

S16Db

We

S16Db

Wd

P

(b)

Wd

WS

P

We

WP

# FIG. 17

FIG. 18

(a)

(b)

(c)

# FIG. 19

(a)                                            (b)

## FIG. 20

(a)

(b)

## FIG. 21

## FIG. 22A

START

S1

PRODUCT SHAPE
MEETING LAYOUT CONDITION?

NO

YES

S2

SET TOOL GUIDE AREA ARG

S3

SET BOUNDING BOX ARB

S4

LAY OUT PRE-FINAL CUT LINE TBb

S5

LAY OUT FINAL CUT LINE TBa

S6

CALCULATE LAYOUT NUMBER OF
PROTRUSION FORMING PORTIONS P (Sub)

S7

SEARCH LAYOUT POSITION

S8

ANY
INTERFERENCE AREA WITH TOOL
GUIDE AREA ARG?

YES

NO

S81

SHIFT TO POSITION FREE
FROM INTERFERENCE

S9

ANY INTERFERENCE WITH
BOUNDING BOX ARB?

YES

NO

S91

SHIFT TO POSITION FREE
FROM INTERFERENCE

S10

DETERMINE LAYOUT

END

# FIG. 22B

```
         ( Sub START )
              |
              v            ┌─── S61
┌──────────────────────────────────┐
│  ACQUIRE CALCULATION CONDITIONS   │
└──────────────────────────────────┘
              |
              v            ┌─── S62
┌──────────────────────────────────┐
│         ACQUIRE DISTANCE La        │
└──────────────────────────────────┘
              |
              v            ┌─── S63
┌──────────────────────────────────┐
│    CALCULATE DEFLECTION AMOUNT    │
└──────────────────────────────────┘
              |
              v            ┌─── S64
┌──────────────────────────────────┐
│      ACQUIRE MAXIMUM PITCH Lb     │
└──────────────────────────────────┘
              |
              v            ┌─── S65
┌──────────────────────────────────┐
│   CALCULATE FORMATION NUMBER Q    │
│          (LAYOUT NUMBER)          │
└──────────────────────────────────┘
              |
              v
          (  RETURN  )
```

## FIG. 23A

## FIG. 23B

## FIG. 23C

## FIG. 23D

FIG. 24A

FIG. 24B

## FIG. 24C

## FIG. 24D

(a)     (b)

## FIG. 25

## FIG. 26

# FIG. 27

## FIG. 28A

(a)

(b)

## FIG. 28B

## FIG. 28C

FIG. 28D

FIG. 28E

FIG. 28F

FIG. 28G

# FIG. 29

FIG. 30A

FIG. 30B

## FIG. 30C

## FIG. 30D

FIG. 31

FIG. 32

EP 4 628 229 A1

## INTERNATIONAL SEARCH REPORT

International application No.

**PCT/JP2023/042111**

| A. | CLASSIFICATION OF SUBJECT MATTER |
|---|---|

*B21D 28/36*(2006.01)i; *B21D 28/00*(2006.01)i; *B23K 26/38*(2014.01)i
FI:   B21D28/36 B; B21D28/00 A; B21D28/00 Z; B21D28/36 A; B23K26/38 A

According to International Patent Classification (IPC) or to both national classification and IPC

| B. | FIELDS SEARCHED |
|---|---|

Minimum documentation searched (classification system followed by classification symbols)

B21D28/36; B21D28/00; B23K26/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2021-146341 A (AMADA CO LTD) 27 September 2021 (2021-09-27) | 1-15 |
| A | JP 2020-75289 A (AMADA CO LTD) 21 May 2020 (2020-05-21) | 1-15 |
| A | JP 2020-37116 A (AMADA CO LTD) 12 March 2020 (2020-03-12) | 1-15 |
| A | JP 6868440 B2 (AMADA CO LTD) 12 May 2021 (2021-05-12) | 1-15 |
| A | JP 2002-143954 A (AMADA CO LTD) 21 May 2002 (2002-05-21) | 1-15 |
| A | JP 6538419 B2 (MITSUI HIGH TEC) 03 July 2019 (2019-07-03) | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/042111**

| Patent document cited in search report | | | Publication date (day/month/year) | Patent family member(s) | Publication date (day/month/year) |
|---|---|---|---|---|---|
| JP | 2021-146341 | A | 27 September 2021 | (Family: none) | |
| JP | 2020-75289 | A | 21 May 2020 | (Family: none) | |
| JP | 2020-37116 | A | 12 March 2020 | (Family: none) | |
| JP | 6868440 | B2 | 12 May 2021 | (Family: none) | |
| JP | 2002-143954 | A | 21 May 2002 | (Family: none) | |
| JP | 6538419 | B2 | 03 July 2019 | US 2016/0332207 A1 | |
| | | | | CN 106140934 A | |

**REFERENCES CITED IN THE DESCRIPTION**

**Patent documents cited in the description**

- JP 2020075289 A
- JP 2021146341 A
- JP 2022189495 A
- JP 2023076773 A
- JP 2023185717 A